(19) Europäisches Patentamt European Patent Office Office européen des brevets

(11) **EP 4 305 882 B1**

(12) **EUROPEAN PATENT SPECIFICATION**

(45) Date of publication and mention of the grant of the patent:
**05.03.2025 Bulletin 2025/10**

(21) Application number: **22711623.3**

(22) Date of filing: **10.03.2022**

(51) International Patent Classification (IPC):
*H04W 48/12* (2009.01)

(52) Cooperative Patent Classification (CPC):
**H04W 48/12**

(86) International application number:
**PCT/IB2022/052178**

(87) International publication number:
**WO 2022/190041 (15.09.2022 Gazette 2022/37)**

(54) **DELIVERY OF ON-DEMAND SIB USING SDT**

BEREITSTELLUNG VON SIB AUF ANFRAGE MITTELS SDT

DÉLIVRANCE DE SIB À LA DEMANDE AU MOYEN D'UNE SDT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2021 US 202163159173 P**

(43) Date of publication of application:
**17.01.2024 Bulletin 2024/03**

(73) Proprietor: **Telefonaktiebolaget LM Ericsson (publ)**
**164 83 Stockholm (SE)**

(72) Inventors:
• **SHREEVASTAV, Ritesh**
**194 47 Upplands Väsby (SE)**
• **ORSINO, Antonino**
**02480 Kirkkonummi (FI)**
• **BERGQVIST, Jens**
**587 37 Linköping (SE)**

• **ENBUSKE, Henrik**
**113 41 Stockholm (SE)**

(74) Representative: **Ericsson**
**Patent Development**
**Torshamnsgatan 21-23**
**164 80 Stockholm (SE)**

(56) References cited:
EP-A1- 3 697 167          WO-A1-2021/030804
US-A1- 2019 124 715

• HUAWEI ET AL: "[Post112-e][609][POS] Positioning support", vol. RAN WG2, no. Electronic; 20210125 - 20210205, 15 January 2021 (2021-01-15), XP051974195, Retrieved from the Internet <URL:https://ftp.3gpp.org/tsg_ran/WG2_RL2/TSGR2_113-e/Docs/R2-2101230.zip R2-2101230 [Post112-e][609][POS] Positioning support in RRC_IDLE and INACTIVE (Huawei).docx> [retrieved on 20210115]

**Description**

Related Applications

This application claims the benefit of provisional patent application serial number 63/159,173, filed March 10, 2021.

Technical Field

The present disclosure related to on-demand system information in a cellular communications system.

Background

Small data solutions have previously been introduced in Long Term Evolution (LTE) with the focus on Machine Type Communication (MTC). For example, Release 15 Early Data Transmission (EDT) and Release 16 Preconfigured Uplink Resources (PUR) have been standardized for LTE for MTC (LTE-M) and Narrowband Internet of Things (NB-IoT). Unlike these features, the Release 17 Small Data Transmission (SDT) for New Radio (NR) is not directly targeting MTC use cases, and the Work Item Description (WID) includes smartphone background traffic as the justification.

The Work Item (WI) objectives outline two main objectives: Random Access Channel (RACH)-based schemes and pre-configured Physical Uplink Shared Channel (PUSCH) resources. Comparing to LTE-M and NB-IoT, the 4-step RACH-based scheme is similar to Release 15 User Plane Early Data Transmission (UP-EDT), and pre-configured PUSCH resources is similar to Release 16 User Plane Preconfigured Uplink Resources (UP-PUR). Further, the Release 17 Small Data is only concerning data transmission in INACTIVE state and hence Control Plane (CP) optimizations of EDT and PUR are so far not relevant. 2-step RACH has not been specified for LTE, and hence there is no LTE counterpart for 2-step RACH-based SDT.

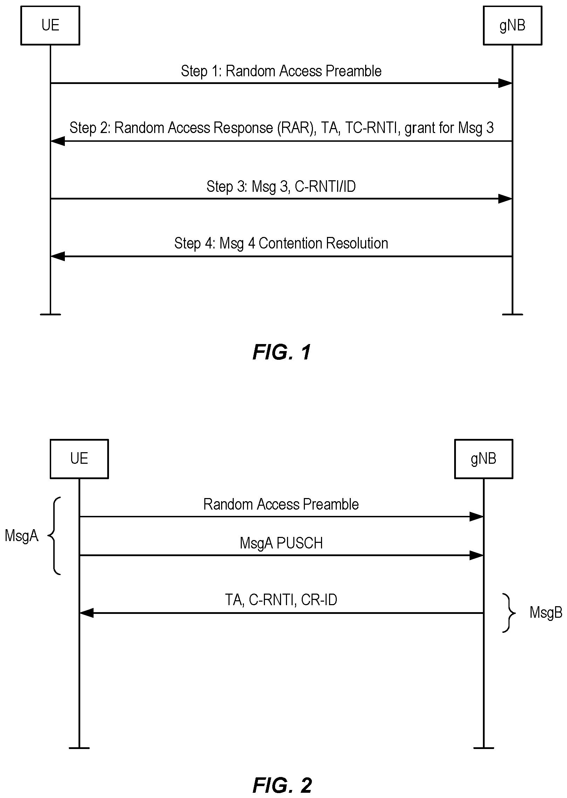

The 4-step RA type has been used in Fourth Generation (4G) LTE and is also the baseline for Fifth Generation (5G) NR. The principle of this procedure in NR is shown in Figure 1. The steps of the 4-step RACH procedure are as follows. Step 1 - Preamble transmission: The User Equipment (UE) randomly selects a RA preamble (PREAMBLE_INDEX) corresponding to a selected Synchronization Signal (SS) / Physical Broadcast Channel (PBCH) block and transmits the preamble on the Physical Random Access Channel (PRACH) occasion mapped to the selected SS/PBCH block. When the next generation Node B (gNB) detects the preamble, it estimates the Timing Advance (TA) the UE should use in order to obtain uplink (UL) synchronization at the gNB.

Step 2 - RA response (RAR): The gNB sends a RA response (RAR) including the TA, the Temporary Cell Radio Network Temporary Identifier (TC-RNTI) (temporary identifier) to be used by the UE, a Random Access Preamble identifier that matches the transmitted PREAMBLE_INDEX, and a grant for Msg3. The UE expects the RAR and, thus, monitors Physical Downlink Control Channel (PDCCH) addressed to Random Access Radio Network Temporary Identifier (RA-RNTI) to receive the RAR message from the gNB until the configured RAR window (ra-ResponseWindow) has expired or until the RAR has been successfully received.

From Third Generation Partnership Project (3GPP) Technical Specification (TS) 38.321: "The MAC entity may stop ra-ResponseWindow (and hence monitoring for Random Access Response(s)) after successful reception of a Random Access Response containing Random Access Preamble identifiers that matches the transmitted PREAMBLE_INDEX."

Step 3 - "Msg3" (UE ID or UE-specific C-RNTI): In Msg3, the UE transmits its identifier (UE ID, or more exactly the initial part of the 5G Temporary Mobile Subscriber Identity (5G-TMSI)) for initial access or, if it is already in RRC_CONNECTED or RRC_INACTIVE mode and needs to, e.g., re-synchronize, its UE-specific Radio Network Temporary Identifier (RNTI).

If the gNB cannot decode Msg3 at the granted UL resources, it may send a Downlink Control Information (DCI) addressed to TC-RNTI for retransmission of Msg3. Hybrid Automatic Repeat Request (HARQ) retransmission is requested until the UEs restart the random access procedure from step 1 after reaching the maximum number of HARQ retransmissions or until Msg3 can be successfully received by the gNB.

Step 4 - "Msg4" (contention resolution): In Msg4, the gNB responds by acknowledging the UE ID or C-RNTI. The Msg4 gives contention resolution, i.e. only one UE ID or C-RNTI will be sent even if several UEs have used the same preamble (and the same grant for Msg3 transmission) simultaneously.

For Msg4 reception, the UE monitors TC-RNTI (if it transmitted its UE ID in Msg3) or C-RNTI (if it transmitted its C-RNTI in Msg3).

The 2-step RA type gives much shorter latency than the ordinary 4-step RA. In the 2-step RA, the preamble and a message corresponding to Msg3 (msgA PUSCH) in the 4-step RA can, depending on configuration, be transmitted in two subsequent slots. The msgA PUSCH is sent on a resource dedicated to the specific preamble. This means that both the preamble and the Msg3 face contention but contention resolution in this case means that either both preamble and Msg 3 are sent without collision or both collide. The 2-step RA procedure is depicted in Figure 2.

Upon successful reception of msgA, the gNB responds with a msgB. The msgB may be either a "successRAR", "fallbackRAR", or "Back off". The content of msgB has been agreed as seen below. It is noted in particular that fallbackRAR provides a grant for a Msg3 PUSCH that identifies resources in which the UE should transmit the PUSCH, as well as other information.

Note: The notations "msgA" and "MsgA" are used interchangeably herein to denote message A. Similarly, the notations "msgB" and "MsgB" are used interchangeably herein to denote message B.

The possibility to replace the 4-step message exchange by a 2-step message exchange would lead to reduced RA latency. On the other hand, the 2-step RA will consume more resources since it uses contention-based transmission of the data. This means that the resources that are configured for the data transmission may often be unused. Another difference is that 2-step RA operates without a timing advance (TA) since there is no feedback from gNB on how to adjust the uplink synchronization before the data payload is transmitted in MsgA PUSCH.

If both the 4-step and 2-step RA are configured in a cell on shared PRACH resources (and for the UE), the UE will choose its preamble from one specific set if it wants to do a 4-step RA, and from another set if it wants to do a 2-step RA. Hence, a preamble partition is done to distinguish between 4-step and 2-step RA when shared PRACH resources are used. Alternatively, the PRACH configurations are different for the 2-step and 4-step RA procedure, in which case it can be deduced from where the preamble transmission is done if the UE is doing a 2-step or 4-step procedure.

In the 3GPP Release 16 2-step RA type procedure, UEs are informed of the potential time-frequency resources where they may transmit MsgA PRACH and MsgA PUSCH via higher layer signaling from the network. PRACH is transmitted in periodically recurring RACH occasions ('ROs'), while PUSCH is transmitted in periodically recurring PUSCH occasions ('POs'). PUSCH occasions are described in MsgA PUSCH configurations provided by higher layer signaling. Each MsgA PUSCH configuration defines a starting time of the PUSCH occasions which is measured from the start of a corresponding RACH occasion. Multiple PUSCH occasions may be multiplexed in time and frequency in a MsgA PUSCH configuration, where POs in an Orthogonal Frequency Division Multiplexing (OFDM) symbol occupy a given number of Physical Resource Blocks (PRBs) and are adjacent in frequency, and where POs occupy 'L' contiguous OFDM symbols. POs multiplexed in time in a MsgA PUSCH configuration may be separated by a configured gap that is 'G' symbols long. The start of the first occupied OFDM symbol in a PUSCH slot is indicated via a start and length indicator value ('SLIV'). The MsgA PUSCH configuration may comprise multiple contiguous PUSCH slots, each slot containing the same number of POs. The start of the first PRB relative to the first PRB in a bandwidth part (BWP) is also given by the MsgA PUSCH configuration. Moreover, the modulation and coding scheme (MCS) for MsgA PUSCH is also given by the MsgA PUSCH configuration.

Each PRACH preamble maps to a PUSCH occasion and a Demodulation Reference Signal (DMRS) port and/or a DMRS port-scrambling sequence combination according to a procedure given in 3GPP TS 38.213. This mapping allows a gNB to uniquely determine the location of the associated PUSCH in time and frequency as well as the DMRS port and/or scrambling from the preamble selected by the UE.

In regard to SDT procedures, NR supports RRC_INACTIVE state, and UEs with infrequent (periodic and/or aperiodic) data transmission (interchangeably referred to herein as small data transmission, or SDT) are generally maintained by the network not in RRC_IDLE but in the RRC_INACTIVE state. Until Release 16, the RRC_INACTIVE state does not support data transmission. Hence, the UE has to resume the connection (i.e., move to RRC_CONNECTED state) for any downlink (DL) data reception and any UL data transmission. Connection setup and subsequently release to RRC_INACTIVE state happens for each data transmission. This results in unnecessary power consumption and signaling overhead. For this reason, support for UE transmission in RRC_INACTIVE state using the random access procedure is introduced in Release 17. SDT is a procedure to transmit UL data from a UE in RRC_INACTIVE state. SDT is performed with either random access or configured grant (CG). The case in which the UE transmits UL data with random access can use both 4-step RA type and 2-step RA type (see description above). If the UE uses 4-step RA type for a SDT procedure, then the UE transmits the UL data in the Msg3. If the UE uses 2-step RA type for a SDT procedure, then the UE transmits UL data in the MsgA.

Two types of Configured Grant (CG) UL transmission schemes have been supported in NR since Release 15, referred as CG Type1 and CG Type2 in the standard. The major difference between these two types of CG transmission is that, for CG Type1, an uplink grant is provided by Radio Resource Control (RRC) configuration and activated automatically, while, in the case of CG Type2, the uplink grant is provided and activated via L1 signaling, i.e., by an UL DCI with Cyclic Redundancy Check (CRC) scrambled by Configured Scheduling Radio Network Temporary Identifier (CS-RNTI). In both cases, the spatial relation used for PUSCH transmission with Configured Grant is indicated by the uplink grant, either provided by the RRC configuration or by an UL DCI.

The CG periodicity is RRC configured, and this is specified in the ConfiguredGrantConfig Information Element (IE). Different periodicity values are supported in NR depending on the subcarrier spacing.

For use in SDT, the gNB may configure the UE with CG Type1 and may also configure Reference Signal Received Power (RSRP) threshold(s) for selection of an UL carrier. The configuration is given in the RRCRelease message sent to the UE while in connected state (to move the UE into Inactive state), or alternatively in another dedicated RRC message, for example while the UE is in RRC_CONNECTED. Alternatively, the configuration is given in RRCRelease message after a SDT procedure where the UE has started the procedure in RRC_INACTIVE and where the UE stays in RRC_INACTIVE after procedure completion. The use of Configured Grant type of resource requires the UE to remain in a synchronous state in that the time alignment is maintained. Should the UE be out of time alignment, a RA type of procedure can be initiated instead (above)

In regard to NR positioning, since Release 15 and the introduction in NR, the LTE Positioning Protocol (LPP) protocol, which is a point-to-point communication protocol between a Location Management Function (LMF) and a target device, has been agreed to be reused for UE positioning in both NR and LTE (3GPP TS 37.355).

At the core network, a new logical node called the LMF is the main server responsible for computing the UE position, based on the NR, Evolved Universal Terrestrial Radio Access (E-UTRA), or both Radio Access Technologies (RATs) specific positioning methods. NR Positioning Protocol A (NRPPA) is the communication protocol between a Next Generation Radio Access Network (NG-RAN) and the LMF.

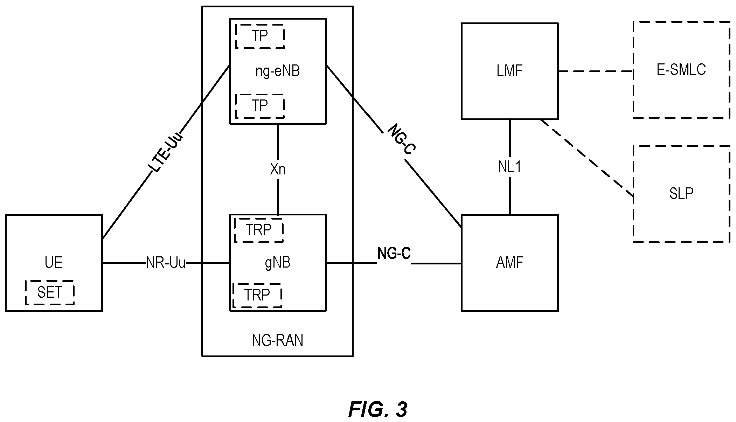

The NR Positioning architecture is defined as illustrated in Figure 3 (see also 3GPP TS 38.305)

New and enhanced positioning methods have been defined in NR (see TS 38.305) such as:

- NR E-CID;
- Multi-Round Trip Time (RTT) Positioning;
- Downlink Angle-of-Departure (DL-AoD);
- Downlink Time Difference of Arrival (DL-TDOA);
- Uplink Time Difference of Arrival (UL-TDOA);
- Uplink Angle of Arrival (UL-AoA), including the Azimuth of Arrival (A-AoA) and the Zenith of Arrival (Z-AoA).

Recent enhancements in Global Navigation Satellite System (GNSS) technology include Real Time Kinematic (RTK) GNSS, which is a differential GNSS positioning technology which enables positioning accuracy improvement from meter level to decimeter or even centimeter level in the right conditions in real-time by exploiting the carrier phase of the GNSS signal rather than only the code phase. Support for RTK GNSS in NR networks should therefore be provided and are under standardization in the Release 16 work item. Several positioning System Information Blocks (posSIBs) have been defined in LTE and NR for delivering RTK Assistance data. Further, there has been agreement to deliver Assistance data for Observed Time Difference of Arrival (OTDOA) and Sensor (barometric pressure sensor) for broadcast.

Below is the list of some of the posSIBs from 3GPP TS 37.355 v 16.3.0

********** Start Excerpt from 3GPP TS 37.355 v16.3.0 **********

**Mapping of *posSibType* to assistance data element**

The supported *posSibType*'s are specified in Table 7.2-1. The GNSS Common and Generic Assistance Data IEs are defined in clause 6.5.2.2. The OTDOA Assistance Data IEs are defined in clause 7.4.2.

**Table 7.2-1: Mapping of posSibType to assistanceDataElement**

| | *posSibType* [12] | *assistanceDataElement* |
|---|---|---|
| GNSS Common Assistance Data (clause 6.5.2.2) | *posSibType1-1* | *GNSS-Reference Time* |
| | *posSibType1-2* | *GNSS-ReferenceLocation* |
| | *posSibType1-3* | *GNSS-IonosphericModel* |
| | *posSibType1-4* | *GNSS-EarthOrientationParameters* |
| | *posSibType1-5* | *GNSS-RTK-ReferenceStationInfo* |
| | *posSibType1-6* | *GNSS-RTK-CommonObservationInfo* |
| | *posSibType1-7* | *GNSS-RTK-AuxiliaryStationData* |

(continued)

| | *posSibType* [12] | *assistanceDataElement* |
|---|---|---|
| GNSS Generic Assistance Data (clause 6.5.2.2) | posSibType2-1 | GNSS-TimeModelList |
| | posSibType2-2 | GNSS-DifferentialCorrections |
| | posSibType2-3 | GNSS-NavigationModel |
| | posSibType2-4 | GNSS-RealTimeIntegrity |
| | posSibType2-5 | GNSS-DataBitAssistance |
| | posSibType2-6 | GNSS-AcquisitionAssistance |
| | posSibType2-7 | GNSS-Almanac |
| | posSibType2-8 | GNSS-UTC-Model |
| | posSibType2-9 | GNSS-AuxiliaryInformation |
| | possibType2-10 | BDS-DifferentialCorrections |
| | posSibType2-11 | BDS-GridModelParameter |
| | posSibType2-12 | GNSS-RTK-Observations |
| | posSibType2-13 | GLO-RTK-Biasinformation |
| | posSibType2-14 | GNSS-RTK-MAC-CorrectionDifferences |
| | posSibType2-15 | GNSS-RTK-Residuals |
| | posSibType2-16 | GNSS-RTK-FKP-Gradients |
| | posSibType2-17 | GNSS-SSR-OrbitCorrections |
| | posSibType2-18 | GNSS-SSR-ClockCorrections |
| | possibType2-19 | GNSS-SSR-CodeBias |
| OTDOA Assistance Data (clause 7.4.2) | posSibType3-1 | OTDOA-UE-Assisted |

********** End Excerpt from 3GPP TS 37.355 v16.3.0 **********

On-demand System information request is a feature in NR that allows the network to only broadcast some of the system information messages when there is a UE that needs to acquire it. The UE requests such System Information messages using either msg1 or msg3 based procedures. The procedure allows a UE to request the needed information on-demand, and it allows the network to minimize the overhead in constantly broadcasting information that no UE is currently acquiring.

Further, in Release 16, System Information messages can be requested by UE and provided by the network also in dedicated state using the RRC Connection Reconfiguration message.

For the RRC on-demand system information (SI) framework, the parameter *si-BroadcastStatus* is used to indicate if an SI message is currently being broadcasted or not. This parameter is defined as:
si-BroadcastStatus ENUMERATED {broadcasting, notBroadcasting}

From the UE perspective, independent of whether an SI message is indicated as *broadcasting* or *notBroadcasting,* the UE obtains the SI scheduling information for the SI message from SIB1. If the SI message is indicated as *broadcasting,* the UE can then directly acquire the SI message based on the SI scheduling information. However, if the SI message is indicated as *notBroadcasting,* the UE first needs to perform the on-demand SI request procedure to the base station in order to initiate the transmission of the SI message (according to the SI scheduling information).

Currently, the on-demand broadcast is based upon the following msg1 and msg3 solutions:

- Broadcast (Msg1 option):

  ○ Msg1 SI Request RACH procedure (PRACH, "RAR")
  ○ Broadcast SI message (for some time)

- Broadcast (Msg3 option):

◦ Msg3 SI Request RACH procedure (PRACH, RAR, RRCSystemInfoRequest, "Msg4")
◦ Broadcast SI message (for some time)

Further in 3GPP Release 16, the UE can request on-demand SIB (including positioning SIBs) using a dedicated procedure as described in the following excerpt from 3GPP TS 38.331 v 16.3.0.

********** Start Excerpt from 3GPP TS 38.331 v16.3.0 **********

- DedicatedSIBRequest

The *DedicatedSIBRequest* message is used to request SIB(s) required by the UE in RRC_CONNECTED as specified in clause 5.2.2.3.5.

Signalling radio bearer: SRB1
RLC-SAP: AM
Logical channel: DCCH
Direction: UE to Network

## DedicatedSIBRequest message

```
-- ASN1START

-- TAG-DEDICATEDSIBREQUEST-START


DedicatedSIBRequest-r16 ::=        SEQUENCE {
    criticalExtensions              CHOICE {
        dedicatedSIBRequest-r16         DedicatedSIBRequest-r16-IEs,
        criticalExtensionsFuture        SEQUENCE {}
    }
}


DedicatedSIBRequest-r16-IEs ::=  SEQUENCE {
    onDemandSIB-RequestList-r16        SEQUENCE {

        requestedSIB-List-r16               SEQUENCE (SIZE (1..maxOnDemandSIB-r16)) OF SIB-ReqInfo-
r16                 OPTIONAL,
        requestedPosSIB-List-r16        SEQUENCE (SIZE (1..maxOnDemandPosSIB-r16)) OF PosSIB-
ReqInfo-r16            OPTIONAL
    } OPTIONAL,
    lateNonCriticalExtension        OCTET STRING            OPTIONAL,
    nonCriticalExtension            SEQUENCE {}             OPTIONAL
}


SIB-ReqInfo-r16 ::=                     ENUMERATED { sib12, sib13, sib14, spare5, spare4, spare3,
spare2, spare1 }


PosSIB-ReqInfo-r16 ::=       SEQUENCE {
    gnss-id-r16                 GNSS-ID-r16                 OPTIONAL,
    sbas-id-r16                 SBAS-ID-r16                 OPTIONAL,
    posSibType-r16              ENUMERATED { posSibType1-1, posSibType1-2, posSibType1-3,
```

```
posSibType1-4, posSibType1-5, posSibType1-6,

                               posSibType1-7, posSibType1-8, posSibType2-1,

posSibType2-2, posSibType2-3, posSibType2-4,

                               posSibType2-5, posSibType2-6, posSibType2-7,

posSibType2-8, posSibType2-9, posSibType2-10,

                               posSibType2-11, posSibType2-12, posSibType2-13,

posSibType2-14, posSibType2-15,

                               posSibType2-16, posSibType2-17, posSibType2-18,

posSibType2-19, posSibType2-20,

                               posSibType2-21, posSibType2-22, posSibType2-23,

posSibType3-1, posSibType4-1,

                               posSibType5-1, posSibType6-1, posSibType6-2,

posSibType6-3,... }

}


-- TAG-DEDICATEDSIBREQUEST-STOP

-- ASN1STOP
```

********** End Excerpt from 3GPP TS 38.331 v16.3.0 **********

Document US 2019 / 0 124 715 A1 may be construed to disclose a method and apparatus from the perspective of a UE (User Equipment). The method includes the UE generating a system information request message. The method further includes the UE transmitting the system information request message to a base station through DCCH (Dedicated Control Channel) if the UE is in RRC_CONNECTED state. The method also includes the UE transmitting the system information request message to the base station through CCCH (Common Control Channel) if the UE is not in RRC_CONNECTED state.

Document "[Post112-e][609][POS] Positioning support in RRC_IDLE and RRC_INACTIVE (Huawei)", Huawei et al., 3GPP draft R2-2101230 may be construed to disclose an evaluation of agreements made in RAN1 on IDLE/INACTIVE positioning during the SI phase and its impacts on RAN2. Inter alia, the following proposals were made. Proposal 6: *RecquestCapabilities*/*ProvideCapbilities* for PRS cannot be sent in RRC_IDLE/INACTIVE (0/14, 3/13, 0/14, 2/14). Proposal 7: *RequestAssistanceData* for DL-PRS cannot be sent for UE in RRC_IDLE/INACTIVE. (0/14, 3/14). Proposal 8: Current stage3 spec has already supported assistance data delivery for DL positioning during RRC_CONNECTED and on-demand SI request in RRC_IDLE/ INACITVE for IDLE/INACTIVE positioning. (14/14). Proposal 9: DL-PRS configuration delivery to the UE in RRC_IDLE/INACTIVE is not supported. (0/14, 2/11). Proposal 10: Current stage3 spec already supports the transfer of *RequestLocationInformation* in RRC_CONNECTED for PRS measurement in IDLE/INACTIVE. (14/14). Proposal 11: Transfer of *RequestLocationInformation* when the UE is in RRC_IDLE/INACTIVE is not supported (0/14, 2/11). Proposal 12: The report of PRS measurement performed in RRC_IDLE/INACTIVE when the UE is in RRC_INACTIVE is supported, not supported when the UE is in IDLE. (0/13, 10/12). Proposal 13: The report of PRS measurement performed in RRC_IDLE/INACTIVE when the UE is in RRC_CONNECTED is supported. (14/14).

Summary

Systems and methods are disclosed related to on-demand system information using Small Data Transmission (SDT) procedures.

According to the present disclosure, there are provided methods, a wireless communication device and a network node according to the independent claims. Further developments are set forth in the dependent claims.

According to a first aspect of the present disclosure, there is provided a method performed by a wireless communication device . The method comprises, while in inactive state, transmitting a message to a network node, wherein the message comprises: an identity, ID, of the wireless communication device; information that indicates one or more System Information Blocks, SIBs, and/or one or more position SIBs, posSIBs, being requested by the wireless communication device; and an indication that the wireless communication device supports a Small Data Transmission, SDT, functionality for requesting the one or more SIBs and/or the one or more posSIBs and/or an indication of a capability of the wireless communication device to obtain SIBs and/or posSIBs via downlink SDT transmission.

According to a second aspect of the present disclosure, there is provided a method performed by a network node. The method comprises, while a wireless communication device is in an inactive state, receiving a message from the wireless communication device, wherein the message comprises: an identity, ID, of the wireless communication device; information that indicates one or more System Information Blocks, SIBs, and/or one or more position SIBs, posSIBs, being requested by the wireless communication device; and an indication that the wireless communication device supports a Small Data Transmission, SDT, functionality for requesting the one or more SIBs and/or the one or more posSIBs and/or an indication of a capability of the wireless communication device to obtain SIBs and/or posSIBs via downlink SDT transmission.

According to a third aspect of the present disclosure, there is provided a wireless communication device adapted to perform the method of the first aspect.

According to a fourth aspect of the present disclosure, there is provided a network node adapted to perform the method of the second aspect.

Whenever in the following disclosure any of the above-stated aspects (independent claims) is disclosed as "optional" (e.g. due to usage of conjunctive terms, such as "can", "may", "should" etc.), it is nevertheless to be read as "mandatory".

Brief Description of the Drawings

Hereinabove and in the following, "examples" pertain to principles underlying the claimed subject-matter and/or being useful for understanding the claimed subject-matter, while "embodiments" pertain to the claimed subject-matter within the claim scope. The accompanying drawing figures incorporated in and forming a part of this specification illustrate several aspects of the disclosure, and together with the description serve to explain the principles of the disclosure.

Figure 1 illustrates the 4-step Random Access (RA) procedure used in Third Generation Partnership Project (3GPP) Long Term Evolution (LTE) and New Radio (NR) according to an example;

Figure 2 illustrates the 2-step RA procedure defined in 3GPP according to an example;

Figure 3 illustrates the NR positioning architecture defined in 3GPP according to an example;

Figure 4 illustrates a cellular communications system according to an example;

Figure 5 illustrates an implementation of Medium Access Control (MAC) Control Element (CE) according to an embodiment of the present disclosure;

Figure 6 illustrates the payload of the MAC CE of Figure 5 according to an embodiment of the present disclosure;

Figure 7 illustrates the operation of a User Equipment (UE) and a network node according to an embodiment of the present disclosure;

Figure 8 illustrates the operation of a UE and a network node according to an embodiment of the present disclosure;

Figure 9 illustrates a Small Data Transmission (SDT) procedure that uses a 4-step RA process to request and obtain on-demand system information according to an embodiment of the present disclosure;

Figure 10 illustrates an SDT procedure that uses a 4-step RA process to request and obtain on-demand system information according to an embodiment of the present disclosure;

Figure 11 is a schematic block diagram of a network node according to an embodiment of the present disclosure, while figures 12 and 13 are schematic block diagrams of a network node according to an example;

Figure 14 is a schematic block diagram of a wireless communication device (specifically as UE) according to an embodiment of the present disclosure, while figure 15 is a schematic block diagram of a wireless communication device (specifically as UE) according to an example;

Figure 16 illustrates a communication system according to an example;

Figure 17 illustrates the host computer, base station, and UE of Figure 16 according to an example;

Figures 18 through 21 are flow charts that illustrate methods according to an example, implemented in a communication system such as that of Figure 16;

Figure 22 illustrates an RRCSystemInfoRequest message according to an embodiment of the present disclosure;

Figure 23 illustrates the bitmap or explicit indication of requested System Information Blocks (SIBs) or positioning SIBs (posSIBs) being added in an *RRCSystemInfoRequest* message according to an embodiment of present disclosure; and

Figure 24 illustrates an RRCResumeRequest according to an embodiment of the present disclosure.

Whenever in the following disclosure the term "embodiment" occurs, reference is to be made to the figure description above to clarify whether an embodiment or an example is meant.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

**Transmission/Reception Point (TRP):** In some embodiments, a TRP may be either a network node, a radio head, a spatial relation, or a Transmission Configuration Indicator (TCI) state. A TRP may be represented by a spatial relation or a TCI state in some embodiments. In some embodiments, a TRP may be using multiple TCI states. In some embodiments, a TRP may a part of the gNB transmitting and receiving radio signals to/from UE according to physical layer properties and parameters inherent to that element. In some embodiments, in Multiple TRP (multi-TRP) operation, a serving cell can schedule UE from two TRPs, providing better Physical Downlink Shared Channel (PDSCH) coverage, reliability and/or data rates. There are two different operation modes for multi-TRP: single Downlink Control Information (DCI) and multi-DCI. For both modes, control of uplink and downlink operation is done by both physical layer and Medium Access Control (MAC). In single-DCI mode, UE is scheduled by the same DCI for both TRPs and in multi-DCI mode, UE is scheduled by independent DCIs from each TRP.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s). With the current solution for on-demand system information, the network cannot deliver UEs System Information Block (SIB) requested via Inactive mode procedures. A UE may request on-demand system information using msg1 or msg3 (in the inactive state), but the network cannot deliver via point to point (unicast) message.

Further, the UE cannot transition to connected mode just for requesting SIBs that are currently not being broadcasted; i.e., the network cannot deliver requested on-demand system information via a connected mode procedure if the request was not made by a UE in connected mode. This is a constraint from the network perspective as it would consume large broadcast resources especially when the on-demand request originates from one UE (or very few) or even large number of UEs but in separate time occasions; in such case, the network cannot deliver point to point and is forced to deliver using broadcast.

Thus, there is a need for systems and methods in this direction for on-demand SIB delivery.

Certain aspects of the present disclosure and their embodiments may provide solutions to the aforementioned or other challenges. In the present disclosure, embodiments of a system and method for on-demand system information (SI) request and delivery using a Small Data Transmission (SDT) framework are provided.

In one embodiment, a Medium Access Control (MAC) based procedure for on-demand SI request and delivery using the SDT framework is provided. In one embodiment, the MAC based procedure includes one or more of the following:

- An existing Logical Channel Identity (LCID) / enhanced LCID (eLCID) for SDT or a new LCID/eLCID is defined where the UE includes or uses this as part of MsgA/Msg3 Transmission.
- The MAC CE including this LCID/eLCID has payloads with the SIBs request (e.g., Bit indicating which SIB is requested).
- Upon receiving such a request, the network (e.g., a network node) provides downlink (DL) Data using SDT framework (e.g., as part of Msg4/RRCRelease) message or subsequent DL transmission in Inactive state.

In another embodiment, a Radio Resource Control (RRC) based procedure for on-demand SI request and delivery using the SDT framework is provided. In one embodiment, the RRC based procedure includes one or more of the following:

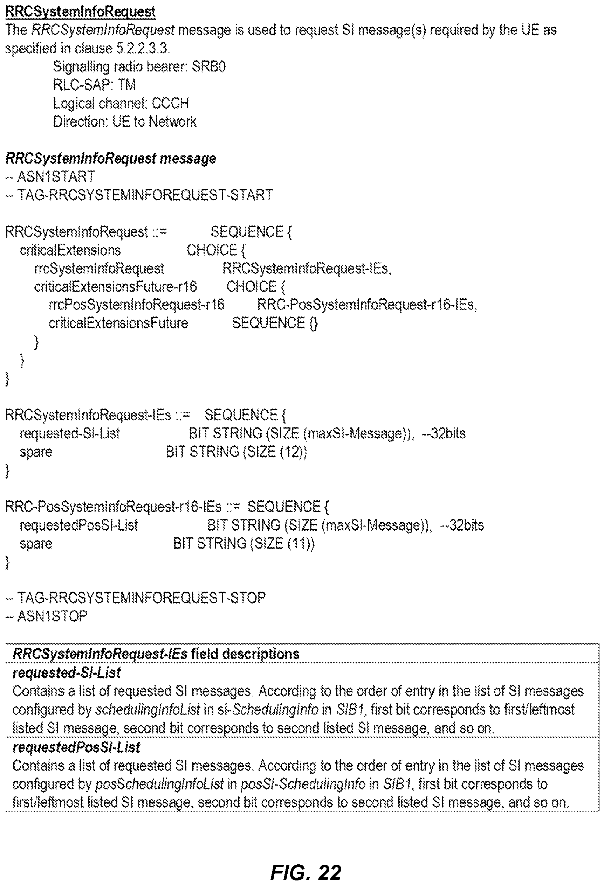

- The network provides information via SIB broadcast that SDT based delivery is supported or enabled/disabled. This can also be provided by dedicated signaling.
- A spare bit from the *RRCSystemInfoRequest-IEs* of the *RRCSystemInfoRequest* illustrated in Figure 22 is used to indicate that UE supports SDT, and the network may choose to deliver by means of point-to-point delivery.
- Instead of the below RRCSystemInfoRequest message, it is possible that the UE sends a new RRC message for SDT request and includes the capability of obtaining SIBs (posSIBs) via DL SDT transmission with a flag bit.
- Alternatively, the network may also determine that the UE is supporting SDT based upon the use of new LCID/eLCID in MAC CE.

Certain embodiments may provide one or more of the following technical advantage(s). Embodiments of present disclosure may provide one or more of the following advantages:

- Power saving mechanisms are essential for RAN based procedures. According to embodiments described herein, the UE is able to transmit and receive data while keeping the RRC status to RRC_INACTIVE and thus avoiding transitioning to RRC_CONNECTED. This means that higher signaling overhead and power consumption to achieve the RRC transition is avoided.

- Embodiments of the present disclosure may provide network resource savings as the network does not have to deliver the SIB using broadcast.
- Embodiments of the present disclosure may be especially useful where the UE can use this mechanism to retrieve positioning SIBs (posSIBs) such as Global Navigation Satellite System (GNSS) Almanac or reference stations which are slow varying or static and can also be large data not suitable for broadcast.

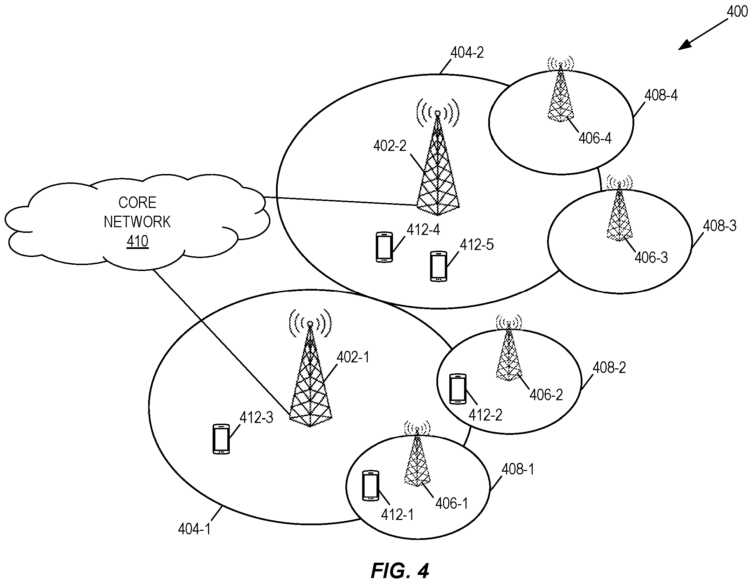

Figure 4 illustrates one example of a cellular communications system 400 in which embodiments of the present disclosure may be implemented. In the embodiments described herein, the cellular communications system 400 is a 5G system (5GS) including a Next Generation RAN (NG-RAN) and a 5G Core (5GC); however, the present disclosure is not limited thereto. The embodiments described herein can be implemented in other types of cellular communications systems (e.g., an Evolved Packet System (EPS)) in which Small Data Transmission (SDTs) are desired. In this example, the RAN includes base stations 402-1 and 402-2, which in the NG-RAN include NR base stations (gNBs) and optionally next generation eNBs (ng-eNBs) (e.g., LTE RAN nodes connected to the 5GC), controlling corresponding (macro) cells 404-1 and 404-2. The base stations 402-1 and 402-2 are generally referred to herein collectively as base stations 402 and individually as base station 402. Likewise, the (macro) cells 404-1 and 404-2 are generally referred to herein collectively as (macro) cells 404 and individually as (macro) cell 404. The RAN may also include a number of low power nodes 406-1 through 406-4 controlling corresponding small cells 408-1 through 408-4. The low power nodes 406-1 through 406-4 can be small base stations (such as pico or femto base stations) or Remote Radio Heads (RRHs), or the like. Notably, while not illustrated, one or more of the small cells 408-1 through 408-4 may alternatively be provided by the base stations 402. The low power nodes 406-1 through 406-4 are generally referred to herein collectively as low power nodes 406 and individually as low power node 406. Likewise, the small cells 408-1 through 408-4 are generally referred to herein collectively as small cells 408 and individually as small cell 408. The cellular communications system 400 also includes a core network 410, which in the 5G System (5GS) is referred to as the 5GC. The base stations 402 (and optionally the low power nodes 406) are connected to the core network 410.

The base stations 402 and the low power nodes 406 provide service to wireless communication devices 412-1 through 412-5 in the corresponding cells 404 and 408. The wireless communication devices 412-1 through 412-5 are generally referred to herein collectively as wireless communication devices 412 and individually as wireless communication device 412. In the following description, the wireless communication devices 412 are oftentimes UEs and as such sometimes referred to as UEs 412, but the present disclosure is not limited thereto.

In the following, embodiments are described in the context of NR but can be applied without any loss of meaning also to LTE or any other Radio Access Technology (RAT). Further, the terms "posSIB", "positioning SIB", and "positioning information" refer to system information related to positioning that can be generally acquired by the UE via broadcast or via dedicated RRC signaling. Also, the terms "SIB" and "normal SIB" refer to the system information not related to position and that also can be acquired via broadcast or via dedicated RRC signaling.

In the following, the terms posSIB or SIB can be exchanged without loss of meaning since the same embodiments, methods, and solution can be applied to both posSIB or SIB.

As used herein, the term "Inactive mode Radio Network Temporary Identifier (I-RNTI) or "I-RNTI-Value" is used to identify the suspended UE context of a UE in RRC_INACTIVE. In one embodiment, the I-RNTI-Value is an information element defined as:

***I-RNTI- Value* information element**

```
-- ASN1START
-- TAG-I-RNTI-VALUE-START
I-RNTI-Value ::= BIT STRING (SIZE(40))
-- TAG-I-RNTI-VALUE-STOP
-- ASN1STOP
```

As used herein, the term "ShortI-RNTI-Value" is used to identify the suspended UE context of a UE in RRC_INACTIVE using fewer bits compared to I-RNTI-Value. In one embodiment, the ShortI-RNTI-Value is an information element defines as:

***ShortI-RNTI-Value* information element**

```
-- ASN1START
-- TAG-SHORTI-RNTI-VALUE-START
ShortI-RNTI-Value ::= BIT STRING (SIZE(24))
-- TAG-SHORTI-RNTI-VALUE-STOP
```

-- ASN1STOP
*MAC Based Solution*

In one embodiment, if the UE 412 is in RRC_INACTIVE and has the need to (re)acquire a SIB(s) or posSIB(s), the UE 412 sends a new uplink MAC Control Element (CE) to the network (e.g., to a network node such as, e.g., the base station 402 or a network node that implements at least part of the functionality of the base station 402) in order to indicate which SIB(s) or posSIB(s) is needed (i.e., without transitioning completely to RRC_CONNECTED).

Also, the use case can be such that the UE 412 is in RRC_INACTIVE and has the need to (re)acquire a SIB or posSIB that is indicated by the network (e.g., by a network node) to only be provided by point-to-point delivery (i.e., without broadcast), and then the UE 412 sends this request through MAC CE. For example, via unicast tag.

The need to (re)acquire a SIB(s) or posSIB(s) may be due to the following reasons:

• a request from an upper layer at the UE 412,
• a stored SIB(s) or posSIB(s) at the UE 412 is outdated or not valid anymore, or
• a particular SIB(s) or posSIB(s) is requested to be acquired to configure or perform a certain functionality (e.g., Sidelink or Non-private network).

Further, in another embodiment, when the sending the uplink MAC CE to the network (e.g., to the network node), the UE 412 may also indicate to the network (e.g., to the network node) (e.g., via the MAC CE) that this particular UE 412 supports the SDT functionality for requesting the SIB(s) or posSIB(s) and wants to use it. Alternatively, the network may understand whether a particular UE 412 support SDT functionality for requesting the SIB(s) or posSIB(s) via the UE capability or the use of LCID/eLCID in MAC CE or use of certain preamble resource group.

In one embodiment, upon receiving the request of the UE 412 via the uplink MAC CE that one (or more) SIBs or posSIBs are requested, the network node (e.g., the base station 402 such as, e.g., the gNB) may decide to perform the following actions:

1. the network node sends a new downlink MAC CE to the UE 412 to disable the SIB(s) or posSIB(s) request via the SDT framework, or
2. the network node sends the requested SIB(s) or posSIB(s) as part of Msg4 or RRCRelease according to the SDT framework, or
3. the network node broadcasts the requested SIB(s) or posSIB(s) (e.g., by changing the broadcasting status flag from *notBroadcasting* to *broadcasting)*.

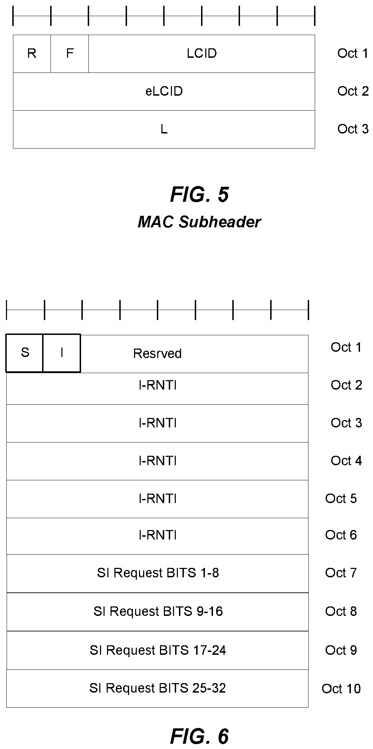

In another embodiment, a possible implementation of what is described above may include that a new eLCID is defined and the payload would contain 32 bits (maxSI message), as illustrated in Figure 5. Further, in one embodiment, the payload is as shown in Figure 6. The R-bit from Figure 5 or new flag S shown in Figure 6 can also be used to distinguish whether the request is for SIB or posSIB in the MAC payload. Further, the MAC payload may also contain the UE ID (e.g., I-RNTI) which may be, e.g., either 24 bits or 40 bits. In one embodiment, there can be a flag to distinguish also that (an example; I) as shown in Figure 6; hence, the MAC CE payload can be, for example, 10 bytes or 8 bytes. The network (e.g., network node) may deduce the I-RNTI type (e.g., short or long) based upon the MAC payload size (e.g., difference of 2 bytes).

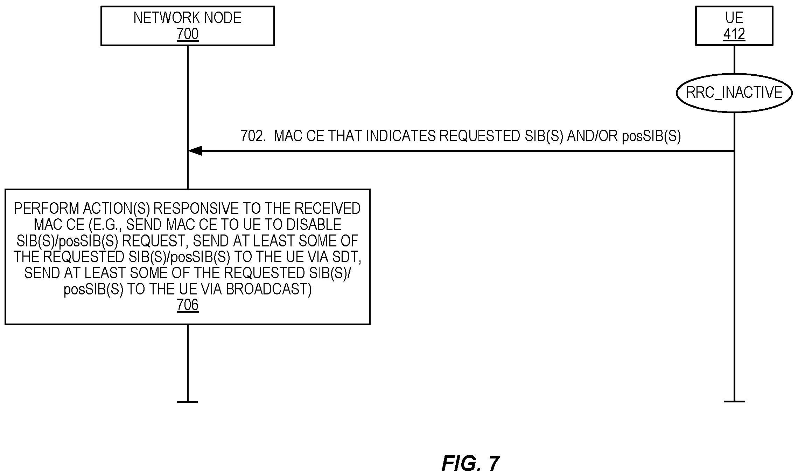

Figure 7 illustrates the operation of a UE 412 and a network node 700 (e.g., a base station 402 or a network node that implements at least some of the functionality of a base station 402) in accordance with an embodiment of the MAC based solution described above. As illustrated, the UE 412, when in inactive state, sends a MAC CE to the network node 700, where the MAC CE indicates one or more SIBs and/or one or more posSIBs requested by the UE 412 (step 702). In addition, in one embodiment, the MAC CE further includes an indication that the UE 412 supports SDT functionality for requesting the SIB(s) and/or posSIB(s) and wants to use this functionality. In another embodiment, the network node 700 determines whether the UE 412 supports SDT functionality for requesting the SIB(s) and/or posSIB(s) via UE capabilities (e.g., UE capabilities previously reported by the UE 412), the use of a LCID or eLCID in the MAC CE that indicates that the UE 412 supports the SDT functionality, or the use of a certain RA preamble resource group by the UE 412 when transmitting an associated RA preamble. Responsive to receiving the MAC CE, the network node 700 performs one or more actions (step 704). The one or more actions performed by the network node 700 may include sending a new downlink MAC CE to the UE 412 to disable the SIB or posSIB request, sending at least one of the requested SIB(s) and/or pos(SIBs) to the UE 412 via SDT, e.g., as part of an associated Msg4 or RRCRelease, and/or broadcasting at least one of the requested SIB(s) and/or posSIB(s) (e.g., by changing the broadcasting status flag from notBroadcasting to broadcasting).

*RRC Based Solution*

In one embodiment, if the UE 412 is in RRC_INACTIVE and has the need to (re)acquire a SIB(s) or posSIB(s), the UE 412 sends an uplink RRC message to the network in order to request the needed SIB(s) or posSIB(s) (i.e., without transitioning completely to RRC_CONNECTED). In one embodiment, the uplink RRC request is sent according to the following:

- A bitmap or an explicit indication is added in an existing RRC message in order to indicate to the network which SIB(s) or posSIB(s) is(are) needed.
- This new bitmap or explicit indication is conveyed to the network (e.g., to a network node) according to either of the following options:

  1. A new or an existing RRC message is sent to the network in order to indicate to the network which SIB(s) or posSIB(s) is (are) needed, and this new RRC message will be used instead of one of the legacy RRC messages normally used when performing the transition from RRC_IDLE to RRC_CONNECTED (e.g., instead of the RRCResumeRequest).
  2. A new or an existing RRC message is sent to the network embedded (i.e., in a container - OCTET STRING) in one of the legacy RRC messages normally used when performing the transition from RRC_IDLE to RRC_CONNECTED (e.g., instead of the RRCResumeRequest).

Further, if the UE 412 uses 4-step RA type for SDT procedure, then the UE 412 transmits the UL messages in the Msg3. If the UE 412 uses 2-step RA type for SDT procedure, then the UE 412 transmits UL messages in the MsgA.

In another embodiment, when sending the uplink RRC request to the network, the UE 412 may also indicate (e.g., in the RRC message) to the network that this particular UE 412 supports the SDT functionality for requesting the SIB(s) or posSIB(s) and wants to use it. Alternatively, the network may understand whether the particular UE 412 support SDT functionality for requesting the SIB(s) or posSIB(s) via the UE capability.

In one embodiment, the network (e.g., network node) may also enable/disable the SDT functionality for requesting the SIB(s) or posSIB(s) via adding an indication in SIB (if the network wants to disable this functionality to all UE under its coverage) or via adding an indication in a dedicated RRC message (if the network wants to disable this functionality to only a particular UE under its coverage).

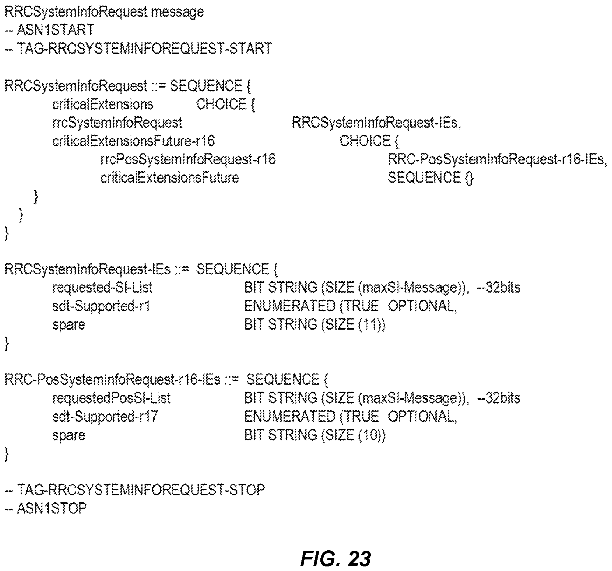

In another embodiment, a possible implementation of what is described above is as follows. A bitmap or an explicit indication is added in an existing RRC message or new RRC message in order to indicate to the network with SIB/posSIB are needed. Figure 23 illustrates an example in which the bitmap or explicit indication is added in an *RRCSystemInfoRequest* message.

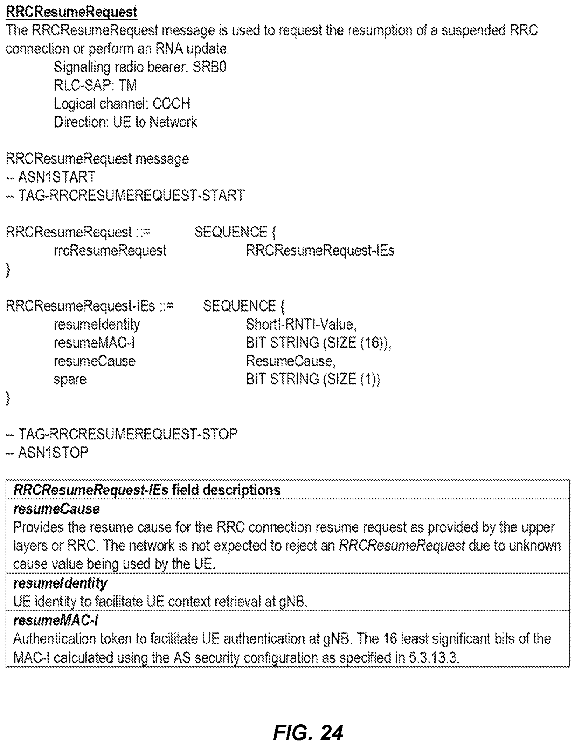

Further, as the above RRC message does not have UE ID, this RRCSystemInfo message is appended after a specific MAC CE as shown in Figure 6 containing the UE ID (e.g., I-RNTI) or after the RRC Resume request message of Figure 24. In such case, the MAC payload may not contain the SI request octets and would instead be provided via the RRC message.

In an embodiment, a separate Preamble group is reserved for transmitting SIB or PosSIB request for UEs supporting SDT functionality. Upon receiving such Preamble, the network would allocate an UL grant that would fit:

# MAC CE + RRC Resume Request + RRC System Info Request Msg

It is also possible to create a new RRC Msg which includes the UE ID + BITMAP of requested SIBs or posSIBs or to append the required attributes (BITMAP of requested SIBs/posSIBs) in any SDT specific RRC message.

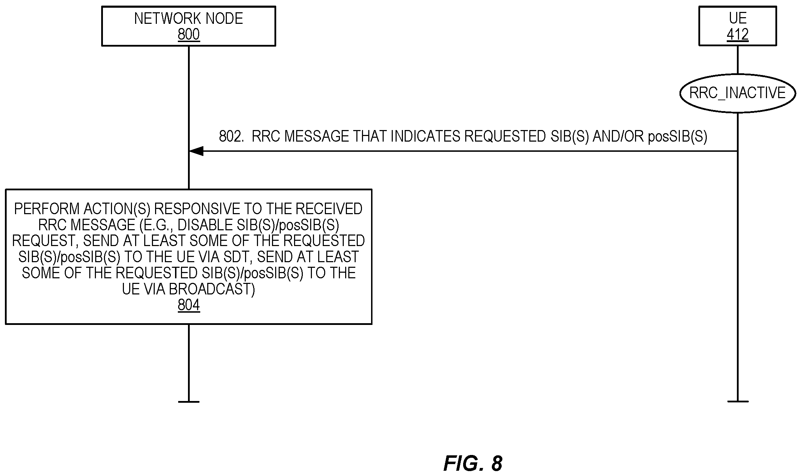

Figure 8 illustrates the operation of a UE 412 and a network node 700 (e.g., a base station 402 or a network node that implements at least some of the functionality of a base station 402) in accordance with an embodiment of the RRC based solution described above. As illustrated, the UE 412, when in inactive state, sends a RRC message to the network node 700, where the RRC message indicates one or more SIBs and/or one or more posSIBs requested by the UE 412 (step 802). The RRC message may be in accordance with any of the embodiments described above. Thus, the details described above are equally applicable here. Note that, in one embodiment, the RRC message is a (new) RRC message for SDT request and includes an indication of the capability of the UE 412 to obtain SIBs and/or posSIBs via downlink SDT transmission (e.g., a flag bit that indicates the capability of the UE 412 to obtain SIBs and/or posSIBs via downlink SDT transmission).

Responsive to receiving the RRC message, the network node 700 performs one or more actions (step 804). The one or more actions performed by the network node 800 may include disable the SIB or posSIB request, sending at least one of the requested SIB(s) and/or pos(SIBs) to the UE 412 via SDT, e.g., as part of an associated Msg4 or RRCRelease, and/or broadcasting at least one of the requested SIB(s) and/or posSIB(s) (e.g., by changing the broadcasting status flag from notBroadcasting to broadcasting).

*SDT Procedure and Network Delivery of SIB via SDT*

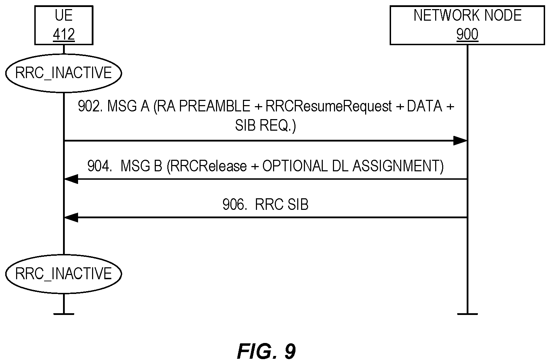

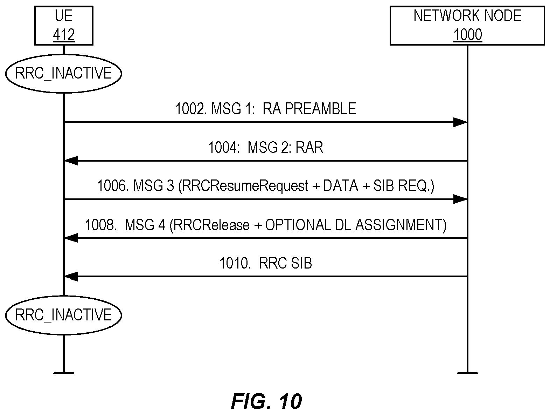

Example procedures are illustrated in Figures 9 and 10. The procedure of Figure 9 is illustrated with respect to 2-step RA. The procedure of Figure 10 is illustrated with respect to 4-step RA. As illustrated in Figure 9, in MsgA, the UE 412 transmits, to a network node 900, a RRCResumeRequest + SmallData (possibly segmented) + SIB request indication (step 902). In MsgB, the network node 900 sends (step 904):

- RRCrelease if no other data expected, no config update pursued, or
- RRC connection request + possibly a dynamic grant to move UE to connected, or
- RRCrelease + Downlink assignment + possibly a configured grant configuration/single UL configured grant.

As illustrated in Figure 10, after the UE 412 transmits the RA preamble to a network node 1000 (step 1002) and receives a RAR from the network node 1000 (step 1004), in Msg3, the UE 412 transmits, to the network node 1000, a RRCResumeRequest + SmallData (possibly segmented) + SIB request indication (step 1006). In Msg4, the network node 1000 sends (step 1008):

- RRCrelease if no other data expected, no config update pursued, or
- RRC connection request + possibly a dynamic grant to move UE to connected, or
- RRCrelease + Downlink assignment + possibly a configured grant configuration/single UL configured grant.

In one embodiment, the network node 900 or 1000 receives a first SDT message through MsgA or Msg3, or alternatively in a configured grant allocation. The network node 900 or 1000 detects that subsequent SDT transmissions are pending through either:

- that the user data in the MAC Sub Protocol Data Unit (PDU) is a segmented Radio Link Control (RLC) payload,
- or by an explicit indication, e.g. SIB request, or both in addition,
- or alternatively by receiving the SIB RRC configuration request using a method as described in this document in previous sections

The network node 900 or 1000 then may provide a SIB RRC message to the UE 412 (step 906 or step 1010). The network node 900 or 1000 may provide the SIB RRC message to the UE 412 by the following means:

- RRCRelease is accompanied with a subsequent downlink assignment for which the UE 412 stays in RRC INACTIVE until successfully decoded.

  ○ The DL assignment (c.f. SPS, Semi Persistent Scheduling) contains the SIB RRC configuration

- A DL assignment (grant) scheduled by the network node 900, for which after successful decoding follows with a RRC release message.

*RRC Procedure Description (Impacts on 3GPP TS 38.331 Chapter 5)*

The below contains an example of 3GPP TS 38.331 procedural changes that implement at least some aspects of the embodiments described above. The example shows how existing procedure needs to be updated to accommodate SDT based procedure. Further, it is possible to have a separate on-demand SI procedure for SDT based Inactive mode mechanism.

5.2.2.3.3 Request for on-demand system information

The UE shall:

1> if *SIB1* includes *si-SchedulingInfo containing si-RequestConfigSUL* and criteria to select supplementary uplink as defined in TS 38.321[13], clause 5.1.1 is met:

2> If *SIB1* includes *si-SchedulingInfo* containing *sdtSupported,* trigger the lower layer to initiate the Small Data Transmission procedure on supplementary uplink in accordance with TS MAC specification using the PRACH preamble(s) and PRACH resource(s) in *si-RequestConfigSUL* corresponding to the SI message(s) that the UE requires to operate within the cell, and for which *si-BroadcastStatus* is set to *notBroadcasting,*
3> retrieve/receive the requested SI message(s) via downlink small data transmission:
2> else trigger the lower layer to initiate the Random Access procedure on supplementary uplink in accordance with [3] using the PRACH preamble(s) and PRACH resource(s) in *si-RequestConfigSUL* corresponding to the SI message(s) that the UE requires to operate within the cell, and for which *si-BroadcastStatus* is set to *notBroadcasting,*
3> if acknowledgement for SI request is received from lower layers:
4> acquire the requested SI message(s) as defined in sub-clause 5.2.2.3.2, immediately;

*Additional Aspects*

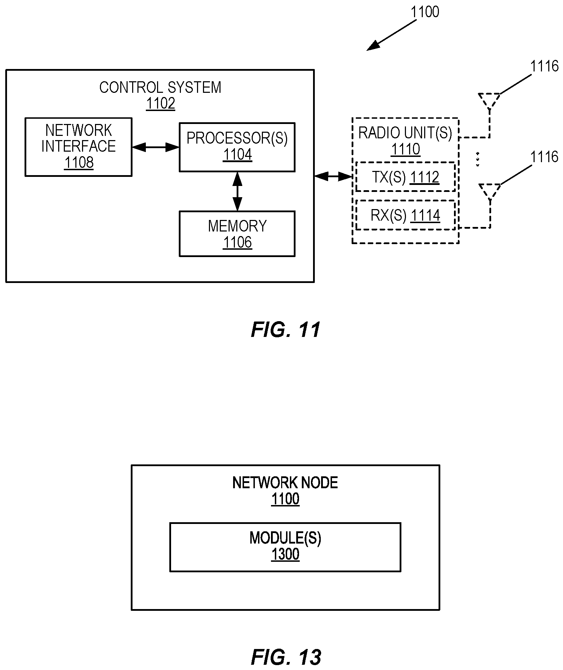

Figure 11 is a schematic block diagram of a network node 1100 according to some embodiments of the present disclosure. Optional features are represented by dashed boxes. The network node 1100 may be, for example, a base station 402 or 406, a network node that implements all or part of the functionality of the base station 402 or gNB, the network node 700, 800, 900, or 1000 as described herein. As illustrated, the network node 1100 includes a control system 1102 that includes one or more processors 1104 (e.g., Central Processing Units (CPUs), Application Specific Integrated Circuits (ASICs), Field Programmable Gate Arrays (FPGAs), and/or the like), memory 1106, and a network interface 1108. The one or more processors 1104 are also referred to herein as processing circuitry. In addition, the network node 1100 may include one or more radio units 1110 that each includes one or more transmitters 1112 and one or more receivers 1114 coupled to one or more antennas 1116. The radio units 1110 may be referred to or be part of radio interface circuitry. In some embodiments, the radio unit(s) 1110 is external to the control system 1102 and connected to the control system 1102 via, e.g., a wired connection (e.g., an optical cable). However, in some other embodiments, the radio unit(s) 1110 and potentially the antenna(s) 1116 are integrated together with the control system 1102. The one or more processors 1104 operate to provide one or more functions of the network node 1100 as described herein (e.g., one or more functions of a base station 402 or 406, a network node that implements all or part of the functionality of the base station 402 or gNB, the network node 700, 800, 900, or 1000, as described herein). In some embodiments, the function(s) are implemented in software that is stored, e.g., in the memory 1106 and executed by the one or more processors 1104.

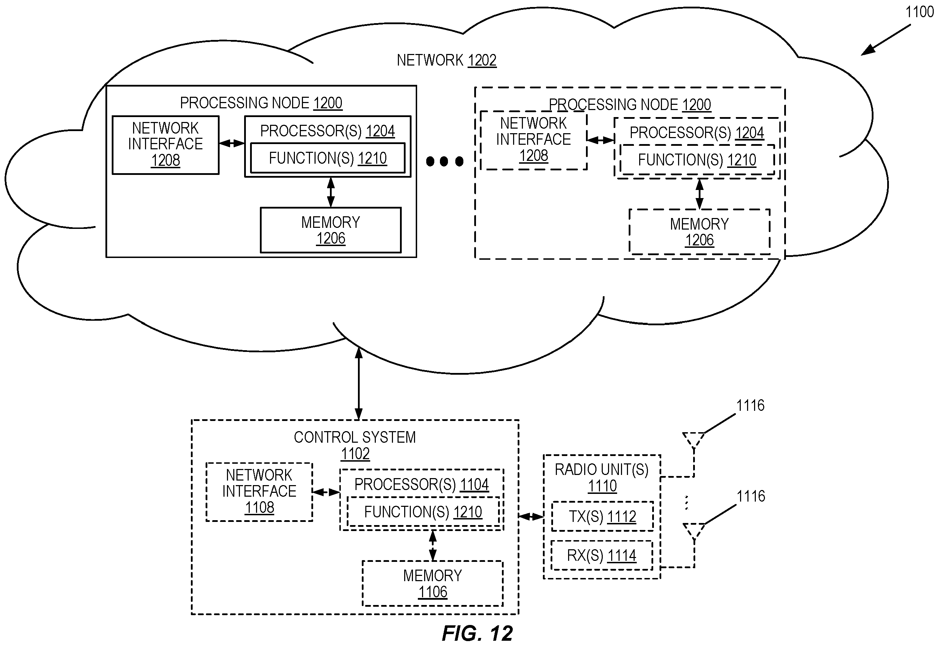

Figure 12 is a schematic block diagram that illustrates a virtualized embodiment of the network node 1100 according to some embodiments of the present disclosure. Again, optional features are represented by dashed boxes. As used herein, a "virtualized" network node is an implementation of the network node 1100 in which at least a portion of the functionality of the network node 1100 is implemented as a virtual component(s) (e.g., via a virtual machine(s) executing on a physical processing node(s) in a network(s)). As illustrated, in this example, the network node 1100 may include the control system 1102 and/or the one or more radio units 1110, as described above. The control system 1102 may be connected to the radio unit(s) 1110 via, for example, an optical cable or the like. The network node 1100 includes one or more processing nodes 1200 coupled to or included as part of a network(s) 1202. If present, the control system 1102 or the radio unit(s) are connected to the processing node(s) 1200 via the network 1202. Each processing node 1200 includes one or more processors 1204 (e.g., CPUs, ASICs, FPGAs, and/or the like), memory 1206, and a network interface 1208.

In this example, functions 1210 of the network node 1100 described herein (e.g., one or more functions of a base station 402 or 406, a network node that implements all or part of the functionality of the base station 402 or gNB, the network node 700, 800, 900, or 1000, as described herein) are implemented at the one or more processing nodes 1200 or distributed across the one or more processing nodes 1200 and the control system 1102 and/or the radio unit(s) 1110 in any desired manner. In some particular embodiments, some or all of the functions 1210 of the network node 1100 described herein are implemented as virtual components executed by one or more virtual machines implemented in a virtual environment(s) hosted by the processing node(s) 1200. As will be appreciated by one of ordinary skill in the art, additional signaling or communication between the processing node(s) 1200 and the control system 1102 is used in order to carry out at least some of the desired functions 1210. Notably, in some embodiments, the control system 1102 may not be included, in which case the radio unit(s) 1110 communicate directly with the processing node(s) 1200 via an appropriate network interface(s).

In some embodiments, a computer program including instructions which, when executed by at least one processor, causes the at least one processor to carry out the functionality of the network node 1100 or a node (e.g., a processing node 1200) implementing one or more of the functions 1210 of the network node 1100 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 13 is a schematic block diagram of the network node 1100 according to some other embodiments of the present disclosure. The network node 1100 includes one or more modules 1300, each of which is implemented in software.

The module(s) 1300 provide the functionality of the network node 1100 described herein. This discussion is equally applicable to the processing node 1200 of Figure 12 where the modules 1300 may be implemented at one of the processing nodes 1200 or distributed across multiple processing nodes 1200 and/or distributed across the processing node(s) 1200 and the control system 1102.

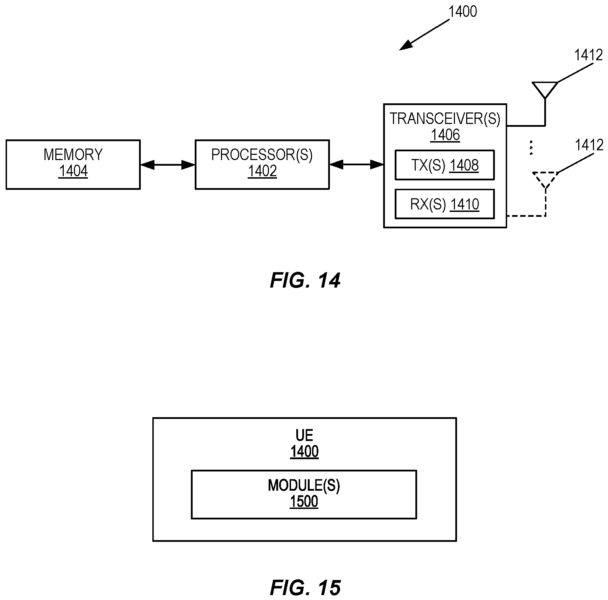

Figure 14 is a schematic block diagram of a wireless communication device 1400 (e.g., a wireless communication device 412 or UE 412) according to some embodiments of the present disclosure. As illustrated, the wireless communication device 1400 includes one or more processors 1402 (e.g., CPUs, ASICs, FPGAs, and/or the like), memory 1404, and one or more transceivers 1406 each including one or more transmitters 1408 and one or more receivers 1410 coupled to one or more antennas 1412. The transceiver(s) 1406 includes radio-front end circuitry connected to the antenna(s) 1412 that is configured to condition signals communicated between the antenna(s) 1412 and the processor(s) 1402, as will be appreciated by on of ordinary skill in the art. The processors 1402 are also referred to herein as processing circuitry. The transceivers 1406 are also referred to herein as radio circuitry. In some embodiments, the functionality of the wireless communication device 1400 described above may be fully or partially implemented in software that is, e.g., stored in the memory 1404 and executed by the processor(s) 1402. Note that the wireless communication device 1400 may include additional components not illustrated in Figure 14 such as, e.g., one or more user interface components (e.g., an input/output interface including a display, buttons, a touch screen, a microphone, a speaker(s), and/or the like and/or any other components for allowing input of information into the wireless communication device 1400 and/or allowing output of information from the wireless communication device 1400), a power supply (e.g., a battery and associated power circuitry), etc.

In some embodiments, a computer program including instructions which, when executed by at least one processor, causes the at least one processor to carry out the functionality of the wireless communication device 1400 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 15 is a schematic block diagram of the wireless communication device 1400 according to some other embodiments of the present disclosure. The wireless communication device 1400 includes one or more modules 1500, each of which is implemented in software. The module(s) 1500 provide the functionality of the wireless communication device 1400 described herein.

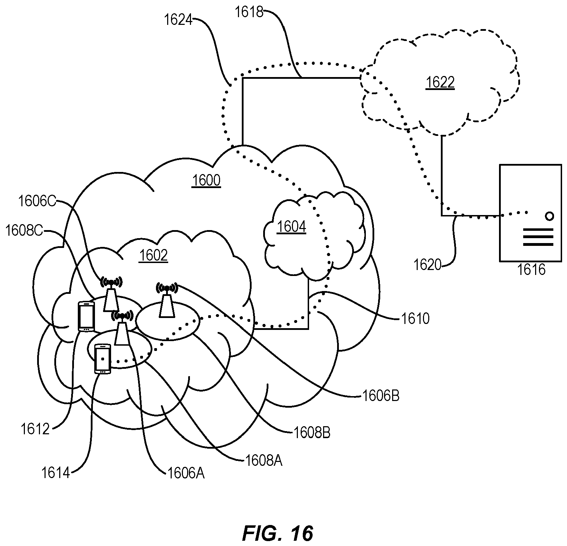

With reference to Figure 16, in accordance with an embodiment, a communication system includes a telecommunication network 1600, such as a 3GPP-type cellular network, which comprises an access network 1602, such as a RAN, and a core network 1604. The access network 1602 comprises a plurality of base stations 1606A, 1606B, 1606C, such as Node Bs, eNBs, gNBs, or other types of wireless Access Points (APs), each defining a corresponding coverage area 1608A, 1608B, 1608C. Each base station 1606A, 1606B, 1606C is connectable to the core network 1604 over a wired or wireless connection 1610. A first UE 1612 located in coverage area 1608C is configured to wirelessly connect to, or be paged by, the corresponding base station 1606C. A second UE 1614 in coverage area 1608A is wirelessly connectable to the corresponding base station 1606A. While a plurality of UEs 1612, 1614 are illustrated in this example, the disclosed embodiments are equally applicable to a situation where a sole UE is in the coverage area or where a sole UE is connecting to the corresponding base station 1606.

The telecommunication network 1600 is itself connected to a host computer 1616, which may be embodied in the hardware and/or software of a standalone server, a cloud-implemented server, a distributed server, or as processing resources in a server farm. The host computer 1616 may be under the ownership or control of a service provider, or may be operated by the service provider or on behalf of the service provider. Connections 1618 and 1620 between the telecommunication network 1600 and the host computer 1616 may extend directly from the core network 1604 to the host computer 1616 or may go via an optional intermediate network 1622. The intermediate network 1622 may be one of, or a combination of more than one of, a public, private, or hosted network; the intermediate network 1622, if any, may be a backbone network or the Internet; in particular, the intermediate network 1622 may comprise two or more sub-networks (not shown).

The communication system of Figure 16 as a whole enables connectivity between the connected UEs 1612, 1614 and the host computer 1616. The connectivity may be described as an Over-the-Top (OTT) connection 1624. The host computer 1616 and the connected UEs 1612, 1614 are configured to communicate data and/or signaling via the OTT connection 1624, using the access network 1602, the core network 1604, any intermediate network 1622, and possible further infrastructure (not shown) as intermediaries. The OTT connection 1624 may be transparent in the sense that the participating communication devices through which the OTT connection 1624 passes are unaware of routing of uplink and downlink communications. For example, the base station 1606 may not or need not be informed about the past routing of an incoming downlink communication with data originating from the host computer 1616 to be forwarded (e.g., handed over) to a connected UE 1612. Similarly, the base station 1606 need not be aware of the future routing of an outgoing uplink communication originating from the UE 1612 towards the host computer 1616.

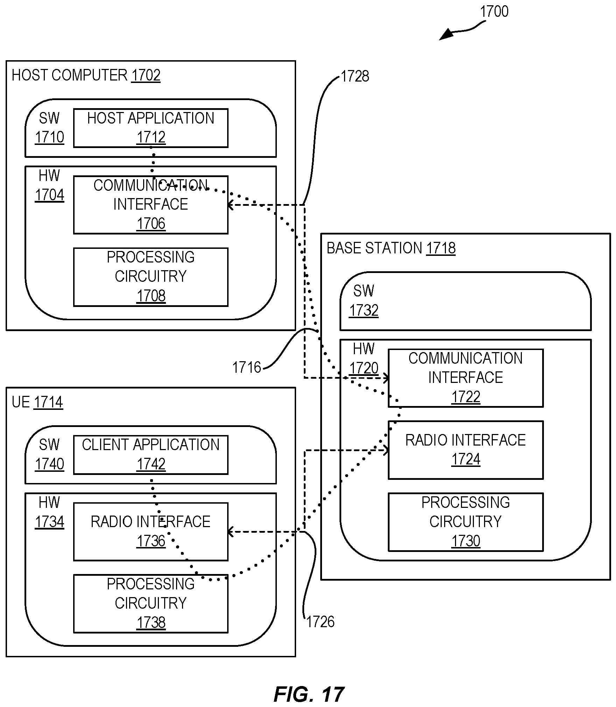

Example implementations, in accordance with an embodiment, of the UE, base station, and host computer discussed in the preceding paragraphs will now be described with reference to Figure 17. In a communication system 1700, a host computer 1702 comprises hardware 1704 including a communication interface 1706 configured to set up and maintain a wired or wireless connection with an interface of a different communication device of the communication system 1700. The host computer 1702 further comprises processing circuitry 1708, which may have storage and/or processing capabilities. In particular, the processing circuitry 1708 may comprise one or more programmable processors, ASICs, FPGAs, or combinations of these (not shown) adapted to execute instructions. The host computer 1702 further comprises software 1710, which is stored in or accessible by the host computer 1702 and executable by the processing circuitry 1708. The software 1710 includes a host application 1712. The host application 1712 may be operable to provide a service to a remote user, such as a UE 1714 connecting via an OTT connection 1716 terminating at the UE 1714 and the host computer 1702. In providing the service to the remote user, the host application 1712 may provide user data which is transmitted using the OTT connection 1716.

The communication system 1700 further includes a base station 1718 provided in a telecommunication system and comprising hardware 1720 enabling it to communicate with the host computer 1702 and with the UE 1714. The hardware 1720 may include a communication interface 1722 for setting up and maintaining a wired or wireless connection with an interface of a different communication device of the communication system 1700, as well as a radio interface 1724 for setting up and maintaining at least a wireless connection 1726 with the UE 1714 located in a coverage area (not shown in Figure 17) served by the base station 1718. The communication interface 1722 may be configured to facilitate a connection 1728 to the host computer 1702. The connection 1728 may be direct or it may pass through a core network (not shown in Figure 17) of the telecommunication system and/or through one or more intermediate networks outside the telecommunication system. In the embodiment shown, the hardware 1720 of the base station 1718 further includes processing circuitry 1730, which may comprise one or more programmable processors, ASICs, FPGAs, or combinations of these (not shown) adapted to execute instructions. The base station 1718 further has software 1732 stored internally or accessible via an external connection.

The communication system 1700 further includes the UE 1714 already referred to. The UE's 1714 hardware 1734 may include a radio interface 1736 configured to set up and maintain a wireless connection 1726 with a base station serving a coverage area in which the UE 1714 is currently located. The hardware 1734 of the UE 1714 further includes processing circuitry 1738, which may comprise one or more programmable processors, ASICs, FPGAs, or combinations of these (not shown) adapted to execute instructions. The UE 1714 further comprises software 1740, which is stored in or accessible by the UE 1714 and executable by the processing circuitry 1738. The software 1740 includes a client application 1742. The client application 1742 may be operable to provide a service to a human or non-human user via the UE 1714, with the support of the host computer 1702. In the host computer 1702, the executing host application 1712 may communicate with the executing client application 1742 via the OTT connection 1716 terminating at the UE 1714 and the host computer 1702. In providing the service to the user, the client application 1742 may receive request data from the host application 1712 and provide user data in response to the request data. The OTT connection 1716 may transfer both the request data and the user data. The client application 1742 may interact with the user to generate the user data that it provides.

It is noted that the host computer 1702, the base station 1718, and the UE 1714 illustrated in Figure 17 may be similar or identical to the host computer 1616, one of the base stations 1606A, 1606B, 1606C, and one of the UEs 1612, 1614 of Figure 16, respectively. This is to say, the inner workings of these entities may be as shown in Figure 17 and independently, the surrounding network topology may be that of Figure 16.

In Figure 17, the OTT connection 1716 has been drawn abstractly to illustrate the communication between the host computer 1702 and the UE 1714 via the base station 1718 without explicit reference to any intermediary devices and the precise routing of messages via these devices. The network infrastructure may determine the routing, which may be configured to hide from the UE 1714 or from the service provider operating the host computer 1702, or both. While the OTT connection 1716 is active, the network infrastructure may further take decisions by which it dynamically changes the routing (e.g., on the basis of load balancing consideration or reconfiguration of the network).

The wireless connection 1726 between the UE 1714 and the base station 1718 is in accordance with the teachings of the embodiments described throughout this disclosure. One or more of the various embodiments improve the performance of OTT services provided to the UE 1714 using the OTT connection 1716, in which the wireless connection 1726 forms the last segment.

A measurement procedure may be provided for the purpose of monitoring data rate, latency, and other factors on which the one or more embodiments improve. There may further be an optional network functionality for reconfiguring the OTT connection 1716 between the host computer 1702 and the UE 1714, in response to variations in the measurement results. The measurement procedure and/or the network functionality for reconfiguring the OTT connection 1716 may be implemented in the software 1710 and the hardware 1704 of the host computer 1702 or in the software 1740 and the hardware 1734 of the UE 1714, or both. In some embodiments, sensors (not shown) may be deployed in or in association with communication devices through which the OTT connection 1716 passes; the sensors may participate in the measurement procedure by supplying values of the monitored quantities exemplified above, or supplying values of other physical quantities from which the software 1710, 1740 may compute or estimate the monitored quantities. The reconfiguring of the OTT connection 1716 may include message format, retransmission settings, preferred routing, etc.; the reconfiguring need not affect the base station 1718, and it may be unknown or imperceptible to the base station 1718. Such procedures and functionalities may be known and practiced in the art. In certain embodiments, measurements may involve proprietary UE signaling facilitating the host computer 1702's measurements of throughput, propagation times, latency, and the like. The measurements may be implemented in that the software 1710 and 1740 causes messages to be transmitted, in particular empty or 'dummy' messages, using the OTT connection 1716 while it monitors propagation times, errors, etc.

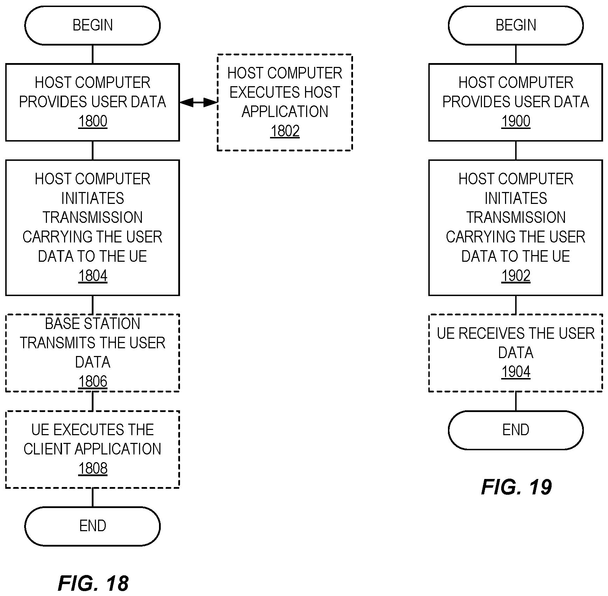

Figure 18 is a flowchart illustrating a method implemented in a communication system, in accordance with one embodiment. The communication system includes a host computer, a base station, and a UE which may be those described with reference to Figures 16 and 17. For simplicity of the present disclosure, only drawing references to Figure 18 will be included in this section. In step 1800, the host computer provides user data. In sub-step 1802 (which may be optional) of step 1800, the host computer provides the user data by executing a host application. In step 1804, the host computer initiates a transmission carrying the user data to the UE. In step 1806 (which may be optional), the base station transmits to the UE the user data which was carried in the transmission that the host computer initiated, in accordance with the teachings of the embodiments described throughout this disclosure. In step 1808 (which may also be optional), the UE executes a client application associated with the host application executed by the host computer.

Figure 19 is a flowchart illustrating a method implemented in a communication system, in accordance with one embodiment. The communication system includes a host computer, a base station, and a UE which may be those described with reference to Figures 16 and 17. For simplicity of the present disclosure, only drawing references to Figure 19 will be included in this section. In step 1900 of the method, the host computer provides user data. In an optional sub-step (not shown) the host computer provides the user data by executing a host application. In step 1902, the host computer initiates a transmission carrying the user data to the UE. The transmission may pass via the base station, in accordance with the teachings of the embodiments described throughout this disclosure. In step 1904 (which may be optional), the UE receives the user data carried in the transmission.

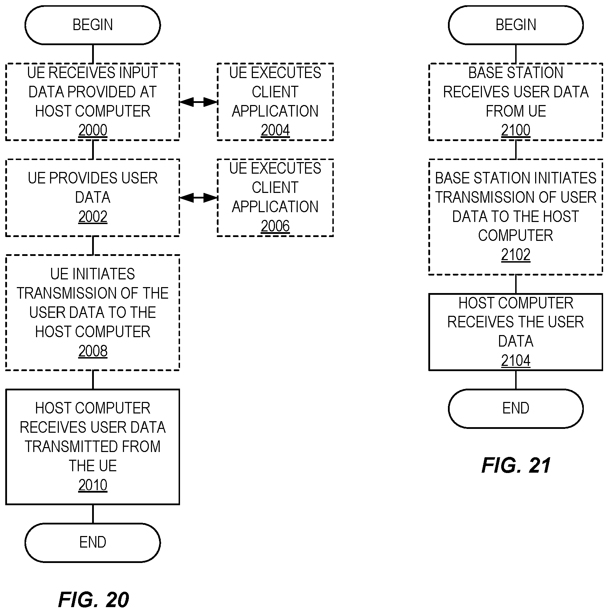

Figure 20 is a flowchart illustrating a method implemented in a communication system, in accordance with one embodiment. The communication system includes a host computer, a base station, and a UE which may be those described with reference to Figures 16 and 17. For simplicity of the present disclosure, only drawing references to Figure 20 will be included in this section. In step 2000 (which may be optional), the UE receives input data provided by the host computer. Additionally or alternatively, in step 2002, the UE provides user data. In sub-step 2004 (which may be optional) of step 2000, the UE provides the user data by executing a client application. In sub-step 2006 (which may be optional) of step 2002, the UE executes a client application which provides the user data in reaction to the received input data provided by the host computer. In providing the user data, the executed client application may further consider user input received from the user. Regardless of the specific manner in which the user data was provided, the UE initiates, in sub-step 2008 (which may be optional), transmission of the user data to the host computer. In step 2010 of the method, the host computer receives the user data transmitted from the UE, in accordance with the teachings of the embodiments described throughout this disclosure.

Figure 21 is a flowchart illustrating a method implemented in a communication system, in accordance with one embodiment. The communication system includes a host computer, a base station, and a UE which may be those described with reference to Figures 16 and 17. For simplicity of the present disclosure, only drawing references to Figure 21 will be included in this section. In step 2100 (which may be optional), in accordance with the teachings of the embodiments described throughout this disclosure, the base station receives user data from the UE. In step 2102 (which may be optional), the base station initiates transmission of the received user data to the host computer. In step 2104 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

**Claims**

1.  A method performed by a wireless communication device (412) comprising:
    while in inactive state, transmitting (702; 802) a message to a network node, wherein the message comprises:

    an identity, ID, of the wireless communication device (412);
    information that indicates one or more System Information Blocks, SIBs, and/or one or more position SIBs, posSIBs, being requested by the wireless communication device (412); and
    an indication that the wireless communication device (412) supports a Small Data Transmission, SDT, functionality for requesting the one or more SIBs and/or the one or more posSIBs and/or an indication of a capability of the wireless communication device (412) to obtain SIBs and/or posSIBs via downlink SDT transmission.

2.  The method of claim 1 wherein the wireless communication device (412) indicates, to the network node, that the wireless communication device (412) supports SmallData Transmission, SDT, functionality for requesting the one or more SIBs and/or the one or more posSIBs via:

    capability information reported to the network node, or
    use of a Logical Channel Identity, LCID, or enhanced Logical Channel Identity, eLCID, in a Medium Access Control, MAC, Control Element, CE, or
    use of a certain random access preamble resource group for transmission of an associated random access preamble.

3.  The method of claim 1 or 2, wherein:

    - the method further comprises receiving (704) at least one of the one or more SIBs and/or at least one of the one or more posSIBs as part of a Msg 4 of an associated random access or as part of an RRC Release message; or
    - the method further comprises receiving (704; 804) at least one of the one or more SIBs and/or at least one of the one or more posSIBs via broadcast, wherein, optionally, receiving (704; 804) the at least one of the one or more SIBs and/or the at least one of the one or more posSIBs via broadcast comprises receiving one or more broadcast status flags associated to the at least one of the one or more SIBs and/or the at least one of the one or more posSIBs where the one or more broadcast status flags are changed to indicate that the at least one of the one or more SIBs and/or the at least one of the one or more posSIBs are broadcasted; or
    - the method further comprises receiving (704; 804) a message that disables the request for the one or more SIBs and/or the one or more posSIBs.

4.  A method performed by a network node (700; 800; 900; 1000), the method comprising:
    while a wireless communication device (412) is in an inactive state, receiving (702; 802) a message from the wireless communication device (412), wherein the message comprises:

    an identity, ID, of the wireless communication device (412);
    information that indicates one or more System Information Blocks, SIBs, and/or one or more position SIBs, posSIBs, being requested by the wireless communication device (412); and
    an indication that the wireless communication device (412) supports a Small Data Transmission, SDT, functionality for requesting the one or more SIBs and/or the one or more posSIBs and/or an indication of a capability of the wireless communication device (412) to obtain SIBs and/or posSIBs via downlink SDT transmission.

5.  The method of claim 1 or 4 wherein the message comprises a Medium Access Control, MAC, Control Element, CE, that comprises the information that indicates the one or more SIBs and/or the one or more posSIBs being requested by the wireless communication device (412).

6.  The method of claim 5 when dependent on claim 4, wherein the network node determines that the wireless communication device (412) supports Small Data Transmission, SDT, functionality for requesting the one or more SIBs and/or the one or more posSIBs via:

    capability information reported from the wireless communication device (412) to the network node, or
    use of a Logical Channel Identity, LCID, or enhanced Logical Channel Identity, eLCID, in the MAC CE, or
    use of a certain random access preamble resource group for transmission of an associated random access preamble.

7. The method of claim 2 or 6 wherein the MAC CE further comprises the identity of the wireless communication device (412).

8. The method of claim 7 wherein the identity of the wireless communication device (412) is either an Inactive mode Radio Network Temporary Identifier, I-RNTI, or Short I-RNTI of the wireless communication device (412), wherein, optionally, the MAC CE further comprises an indicator that indicates whether the identity of the wireless communication device (412) comprised in the MAC CE is an I-RNTI or a Short I-RNTI.

9. The method of any of claims 2 and 6 to 8 wherein:

   (a) the MAC CE further comprises information that indicates whether the one or more SIBs and/or the one or more posSIBs being requested by the wireless communication device (412) are one or more SIBs or one or more posSIBs; and/or
   (b) the MAC CE comprises a subheader that comprises the eLCID,

   wherein the eLCID comprises a plurality of bits that indicate which of a plurality of SIBs and/or posSIBs are being requested by the wireless communication device (412), wherein, optionally, the MAC CE comprises a flag in the subheader or in the eLCID that indicates whether the one or more SIBs and/or the one or more posSIBs being requested by the wireless communication device (412) are one or more SIBs or one or more posSIBs.

10. The method of any of claims 2 and 6 to 8, wherein the MAC CE comprises a subheader that comprises the eLCID, wherein the eLCID comprises a plurality of bits that indicate which of a plurality of SIBs and/or posSIBs are being requested by the wireless communication device (412), wherein, optionally, the MAC CE comprises a flag in the subheader or in the eLCID that indicates whether the one or more SIBs and/or the one or more posSIBs being requested by the wireless communication device (412) are one or more SIBs or one or more posSIBs, wherein the eLCID further comprises the identity of the wireless communication device (412).

11. The method of claim 10 when depending on any of claims 2, 6 or 7, wherein the identity of the wireless communication device (412) is either an I-RNTI or Short I-RNTI of the wireless communication device (412), wherein, optionally, the eLCID further comprises an indicator that indicates whether the identity of the wireless communication device (412) comprised in the eLCID is an I-RNTI or a Short I-RNTI.

12. The method of claim 1 or 4 wherein the message comprises a Radio Resource Control, RRC, message that comprises the information that indicates the one or more SIBs and/or the one or more posSIBs being requested by the wireless communication device (412), wherein, optionally, the information that indicates the one or more SIBs and/or the one or more posSIBs being requested by the wireless communication device (412) comprises a bitmap or explicit indication that indicates one or more SIBs and/or one or more posSIBs being requested by the wireless communication device (412).

13. The method of claim 4 or any of claims 5 to 12 when dependent on claim 4, wherein:

   - the method further comprises transmitting (704) at least one of the one or more SIBs and/or at least one of the one or more posSIBs to the wireless communication device (412) as part of a Msg 4 of an associated random access or as part of an RRC Release message; or
   - the method further comprises broadcasting (704; 804) at least one of the one or more SIBs and/or at least one of the one or more posSIBs, wherein, optionally, broadcasting (704; 804) the at least one of the one or more SIBs and/or the at least one of the one or more posSIBs comprises sending one or more broadcast status flags associated to the at least one of the one or more SIBs and/or the at least one of the one or more posSIBs where the one or more broadcast status flags are changed to indicate that the at least one of the one or more SIBs and/or the at least one of the one or more posSIBs are broadcasted; or
   - the method further comprises transmitting (704; 804) a message that disables the request for the one or more SIBs and/or the one or more posSIBs.

14. A wireless communication device (412) adapted to perform the method of any one of:

   - claims 1 to 3; and
   - any of claims 5 and 7 to 12 when dependent on claim 1.

15. A network node (700; 800; 900; 1000) adapted to perform the method of any one of:

   - claim 4;
   - claim 5 when dependent on claim 4;
   - claim 6;
   - any of claims 7 to 12 when dependent on claim 4; and
   - claim 13.

**Patentansprüche**

1. Verfahren, das von einer drahtlosen Kommunikationsvorrichtung (412) durchgeführt wird und umfasst:
   während in einem inaktiven Zustand, Senden (702; 802) einer Nachricht an einen Netzwerkknoten, wobei die Nachricht Folgendes umfasst:

   eine Identität, ID, der drahtlosen Kommunikationsvorrichtung (412);
   Informationen, die einen oder mehrere Systeminformationsblöcke, SIBs, und einen oder mehrere Positions-SIBs, posSIBs, anzeigen, die von der drahtlosen Kommunikationsvorrichtung (412) angefordert werden; und
   eine Anzeige, dass die drahtlose Kommunikationsvorrichtung (412) eine Kleindatenübertragungsfunktionalität, SDT-Funktionalität, zum Anfordern des einen oder der mehreren SIBs und/oder des einen oder der mehreren posSIBs unterstützt, und/oder eine Anzeige einer Fähigkeit der drahtlosen Kommunikationsvorrichtung (412) zum Erhalten von SIBs und/oder posSIBs über Downlink-STD-Übertragung.

2. Verfahren nach Anspruch 1, wobei die drahtlose Kommunikationsvorrichtung (412) dem Netzwerkknoten durch Folgendes anzeigt, dass die drahtlose Kommunikationsvorrichtung (412) Kleindatenübertragungsfunktionalität, SDT-Funktionalität, zum Anfordern des einen oder der mehreren SIBs und/oder des einen oder der mehreren posSIBs unterstützt:

   Fähigkeitsinformationen, die an den Netzwerkknoten gemeldet werden, oder
   Verwendung einer Logikkanalidentität, LCID, oder einer erweiterten Logikkanalidentität, eLCID, in einem Steuerelement, CE, zur Medienzugriffssteuerung, MAC, oder
   Verwendung einer bestimmten Direktzugriffspräambel-Ressourcengruppe zur Übertragung einer assoziierten Direktzugriffspräambel.

3. Verfahren nach Anspruch 1 oder 2, wobei:

   - das Verfahren ferner Empfangen (704) mindestens eines von dem einen oder den mehreren SIBs und/oder mindestens eines von dem einen oder den mehreren posSIBs als Teil einer Msg4 eines assoziierten Direktzugriffs oder als Teil einer RRC-Release-Nachricht umfasst; oder
   - das Verfahren ferner Empfangen (704; 804) mindestens eines von dem einen oder den mehreren SIBs und/oder mindestens eines von dem einen oder den mehreren posSIBs per Broadcast umfasst, wobei optional das Empfangen per Broadcast (704; 804) des mindestens eines von dem einen oder den mehreren SIBs und/oder des mindestens einen von dem einen oder den mehreren posSIBs Empfangen eines oder mehrerer Broadcast-Statusflags umfasst, die mit dem mindestens einen von dem einen oder den mehreren SIBs und/oder dem mindestens einen von dem einen oder den mehreren posSIBs assoziiert sind, wobei das eine oder die mehreren Broadcast-Statusflags geändert werden, um anzuzeigen, dass der mindestens eine von dem einen oder den mehreren SIBs und/oder der mindestens eine von dem einen oder den mehreren posSIBs per Broadcast gesendet werden; oder
   - das Verfahren ferner Empfangen (704; 804) einer Nachricht umfasst, die die Anforderung für den einen oder die mehreren SIBs und/oder den einen oder die mehreren posSIBs deaktiviert.

4. Verfahren, das von einem Netzwerkknoten (1000) durchgeführt wird, wobei das Verfahren Folgendes umfasst:
   während eine drahtlose Kommunikationsvorrichtung (412) in einem inaktiven Zustand ist, Empfangen (702; 802) einer Nachricht von der drahtlosen Kommunikationsvorrichtung (412), wobei die Nachricht Folgendes umfasst:

   eine Identität, ID, der drahtlosen Kommunikationsvorrichtung (412);
   Informationen, die einen oder mehrere Systeminformationsblöcke, SIBs, und einen oder mehrere Positions-SIBs, posSIBs, anzeigen, die von der drahtlosen Kommunikationsvorrichtung (412) angefordert werden; und

eine Anzeige, dass die drahtlose Kommunikationsvorrichtung (412) eine Kleindatenübertragungsfunktionalität, SDT-Funktionalität, zum Anfordern des einen oder der mehreren SIBs und/oder des einen oder der mehreren posSIBs unterstützt, und/oder eine Anzeige einer Fähigkeit der drahtlosen Kommunikationsvorrichtung (412) zum Erhalten von SIBs und/oder posSIBs über Downlink-STD-Übertragung.

5. Verfahren nach Anspruch 1 oder 4, wobei die Nachricht ein Steuerelement, CE, zur Medienzugriffssteuerung, MAC, umfasst, das die Informationen umfasst, die den einen oder die mehreren SIBs und/oder den einen oder die mehreren posSIBs anzeigen, die von der drahtlosen Kommunikationsvorrichtung (412) angefordert werden.

6. Verfahren nach Anspruch 5, wenn abhängig von Anspruch 4, wobei der Netzwerkknoten durch Folgendes bestimmt, dass die drahtlose Kommunikationsvorrichtung (412) Kleindatenübertragungsfunktionalität, SDT-Funktionalität, zum Anfordern des einen oder der mehreren SIBs und/oder des einen oder der mehreren posSIBs unterstützt:

Fähigkeitsinformationen, die von der drahtlosen Kommunikationsvorrichtung (412) an den Netzwerkknoten gemeldet werden, oder
Verwendung einer Logikkanalidentität, LCID, oder einer erweiterten Logikkanalidentität, eLCID, im MAC-CE oder
Verwendung einer bestimmten Direktzugriffspräambel-Ressourcengruppe zur Übertragung einer assoziierten Direktzugriffspräambel.

7. Verfahren nach Anspruch 2 oder 6, wobei das MAC-CE ferner die Identität der drahtlosen Kommunikationsvorrichtung (412) umfasst.

8. Verfahren nach Anspruch 7, wobei die Identität der drahtlosen Kommunikationsvorrichtung (412) entweder eine temporäre Funknetzwerkkennung im inaktiven Modus, I-RNTI, oder eine Kurz-I-RNTI der drahtlosen Kommunikationsvorrichtung (412) ist, wobei optional das MAC-CE ferner einen Indikator umfasst, der anzeigt, ob die im MAC-CE umfasste Identität der drahtlosen Kommunikationsvorrichtung (412) eine I-RNTI oder eine Kurz-I-RNTI ist.

9. Verfahren nach einem der Ansprüche 2 und 6 bis 8, wobei:

(a) das MAC-CE ferner Informationen umfasst, die anzeigen, ob es sich bei dem einen oder den mehreren SIBs und/oder dem einen oder den mehreren posSIBs, die von der drahtlosen Kommunikationsvorrichtung (412) angefordert werden, um einen oder mehrere SIBs oder einen oder mehrere posSIBs handelt; und/oder
(b) das MAC-CE einen Subheader umfasst, der die eLCID umfasst, wobei die eLCID eine Mehrzahl von Bits umfasst, die anzeigt, welcher einer Mehrzahl von SIBs und/oder posSIBs von der drahtlosen Kommunikationsvorrichtung (412) angefordert wird, wobei optional das MAC-CE ein Flag im Subheader oder in der eLCID umfasst, das anzeigt, ob es sich bei dem einen oder den mehreren SIBs und/oder dem einen oder den mehreren posSIBs, die von der drahtlosen Kommunikationsvorrichtung (412) angefordert werden, um einen oder mehrere SIBs oder einen oder mehrere posSIBs handelt.

10. Verfahren nach einem der Ansprüche 2 und 6 bis 8, wobei das MAC-CE einen Subheader umfasst, der die eLCID umfasst, wobei die eLCID eine Mehrzahl von Bits umfasst, die anzeigt, welcher einer Mehrzahl von SIBs und/oder posSIBs von der drahtlosen Kommunikationsvorrichtung (412) angefordert wird, wobei optional das MAC-CE ein Flag im Subheader oder in der eLCID umfasst, das anzeigt, ob es sich bei dem einen oder den mehreren SIBs und/oder dem einen oder den mehreren posSIBs, die von der drahtlosen Kommunikationsvorrichtung (412) angefordert werden, um einen oder mehrere SIBs oder einen oder mehrere posSIBs handelt, wobei die eLCID ferner die Identität der drahtlosen Kommunikationsvorrichtung (412) umfasst.

11. Verfahren nach Anspruch 10, wenn abhängig von einem der Ansprüche 2, 6 oder 7, wobei die Identität der drahtlosen Kommunikationsvorrichtung (412) entweder eine I-RNTI oder eine Kurz-I-RNTI der drahtlosen Kommunikationsvorrichtung (412) ist, wobei optional die eLCID ferner einen Indikator umfasst, der anzeigt, ob die in der eLCID umfasste Identität der drahtlosen Kommunikationsvorrichtung (412) eine I-RNTI oder eine Kurz-I-RNTI ist.

12. Verfahren nach Anspruch 1 oder 4, wobei die Nachricht eine Funkressourcensteuerungsnachricht, RRC-Nachricht, umfasst, die die Informationen umfasst, die den einen oder die mehreren SIBs und/oder den einen oder die mehreren posSIBs anzeigen, die von der drahtlosen Kommunikationsvorrichtung (412) angefordert werden,

wobei optional die Informationen, die den einen oder die mehreren SIBs und/oder den einen oder die mehreren posSIBs anzeigen, die von der drahtlosen Kommunikationsvorrichtung (412) angefordert werden, eine Bitmap oder eine explizite Anzeige umfassen, die einen oder mehrere SIBs und/oder einen oder mehrere posSIBs anzeigt, die von der drahtlosen Kommunikationsvorrichtung (412) angefordert werden.

13. Verfahren nach Anspruch 4 oder einem der Ansprüche 5 bis 12, wobei:

- das Verfahren ferner Senden (704) mindestens eines von dem einen oder den mehreren SIBs und/oder mindestens eines von dem einen oder den mehreren posSIBs als Teil einer Msg4 eines assoziierten Direktzugriffs oder als Teil einer RRC-Release-Nachricht an die drahtlose Kommunikationsvorrichtung (412) umfasst; oder
- das Verfahren ferner Senden (704; 804) mindestens eines von dem einen oder den mehreren SIBs und/oder mindestens eines von dem einen oder den mehreren posSIBs per Broadcast umfasst, wobei optional das Senden per Broadcast (704; 804) des mindestens einen von dem einem einen oder den mehreren SIBs und/oder des mindestens einen von dem einen oder den mehreren posSIBs Senden eines oder mehrerer Broadcast-Statusflags umfasst, die mit dem mindestens einen von dem einen oder den mehreren SIBs und/oder dem mindestens einen von dem einen oder den mehreren posSIBs assoziiert sind, wobei das eine oder die mehreren Broadcast-Statusflags geändert werden, um anzuzeigen, dass der mindestens eine von dem einen oder den mehreren SIBs und/oder der mindestens eine von dem einen oder den mehreren posSIBs per Broadcast gesendet werden; oder
- das Verfahren ferner Senden (704; 804) einer Nachricht umfasst, die die Anforderung für den einen oder die mehreren SIBs und/oder den einen oder die mehreren posSIBs deaktiviert.

14. Drahtlose Kommunikationsvorrichtung (412), ausgelegt zum Durchführen des Verfahrens nach einem der folgenden Ansprüche:

- Anspruch 1 bis 3; und
- einem der Ansprüche 5 und 7 bis 12, wenn abhängig von Anspruch 1.

15. Netzwerkknoten (700; 800; 900; 1000), ausgelegt zum Durchführen des Verfahrens nach einem der folgenden Ansprüche:

- Anspruch 4;
- Anspruch 5, wenn abhängig von Anspruch 4;
- Anspruch 6;
- einem der Ansprüche 7 bis 12, wenn abhängig von Anspruch 4; und
- Anspruch 13.

**Revendications**

1. Procédé réalisé par un dispositif de communication sans fil (412) comprenant :
pendant un état inactif, la transmission (702 ; 802) d'un message à un nœud de réseau, dans lequel le message comprend :

une identité, ID, du dispositif de communication sans fil (412) ;
des informations qui indiquent un ou plusieurs blocs d'informations système, SIB, et/ou un ou plusieurs SIB de position, posSIB, étant demandés par le dispositif de communication sans fil (412) ; et
une indication que le dispositif de communication sans fil (412) prend en charge une fonctionnalité de transmission de petites données, SDT, pour demander les un ou plusieurs SIB et/ou les un ou plusieurs posSIB et/ou une indication d'une capacité du dispositif de communication sans fil (412) à obtenir des SIB et/ou des posSIB via une transmission SDT de liaison descendante.

2. Procédé selon la revendication 1, dans lequel le dispositif de communication sans fil (412) indique, au nœud de réseau, que le dispositif de communication sans fil (412) prend en charge une fonctionnalité de transmission de petites données, SDT, pour demander les un ou plusieurs SIB et/ou les un ou plusieurs posSIB via :

des informations de capacité rapportées au nœud de réseau, ou

l'utilisation d'une identité de canal logique, LCID, ou d'une identité de canal logique améliorée, eLCID, dans un élément de commande, CE, de commande d'accès au support, MAC, ou

l'utilisation d'un certain groupe de ressources de préambule d'accès aléatoire pour une transmission d'un préambule d'accès aléatoire associé.

3. Procédé selon la revendication 1 ou 2, dans lequel :

- le procédé comprend en outre la réception (704) d'au moins l'un des un ou plusieurs SIB et/ou d'au moins l'un des un ou plusieurs posSIB dans le cadre d'un Msg 4 d'un accès aléatoire associé ou dans le cadre d'un message de libération RRC ; ou
- le procédé comprend en outre la réception (704 ; 804) d'au moins l'un des un ou plusieurs SIB et/ou d'au moins l'un des un ou plusieurs posSIB via diffusion, dans lequel, facultativement, la réception (704 ; 804) de l'au moins un des un ou plusieurs SIB et/ou de l'au moins un des un ou plusieurs posSIB via diffusion comprend la réception d'un ou plusieurs drapeaux de statut de diffusion associés à l'au moins un des un ou plusieurs SIB et/ou à l'au moins un des un ou plusieurs posSIB où les un ou plusieurs drapeaux de statut de diffusion sont changés pour indiquer que l'au moins un des un ou plusieurs SIB et/ou l'au moins un des un ou plusieurs posSIB sont diffusés ; ou
- le procédé comprend en outre la réception (704 ; 804) d'un message qui désactive la demande des un ou plusieurs SIB et/ou des un ou plusieurs posSIB.

4. Procédé réalisé par un nœud de réseau (700 ; 800 ; 900 ; 1000), le procédé comprenant :
pendant qu'un dispositif de communication sans fil (412) est dans un état inactif, la réception (702 ; 802) d'un message depuis le dispositif de communication sans fil (412), dans lequel le message comprend :

une identité, ID, du dispositif de communication sans fil (412) ;
des informations qui indiquent un ou plusieurs blocs d'informations système, SIB, et/ou un ou plusieurs SIB de position, posSIB, étant demandés par le dispositif de communication sans fil (412) ; et
une indication que le dispositif de communication sans fil (412) prend en charge une fonctionnalité de transmission de petites données, SDT, pour demander les un ou plusieurs SIB et/ou les un ou plusieurs posSIB et/ou une indication d'une capacité du dispositif de communication sans fil (412) à obtenir des SIB et/ou des posSIB via une transmission SDT de liaison descendante.

5. Procédé selon la revendication 1 ou 4, dans lequel le message comprend un élément de commande, CE, de commande d'accès au support, MAC, qui comprend les informations indiquant les un ou plusieurs SIB et/ou les un ou plusieurs posSIB étant demandés par le dispositif de communication sans fil (412).

6. Procédé selon la revendication 5 lorsqu'elle dépend de la revendication 4, dans lequel le nœud de réseau détermine que le dispositif de communication sans fil (412) prend en charge une fonctionnalité de transmission de petites données, SDT, pour demander les un ou plusieurs SIB et/ou les un ou plusieurs posSIB via :

des informations de capacité rapportées du dispositif de communication sans fil (412) au nœud de réseau, ou
l'utilisation d'une identité de canal logique, LCID, ou d'une identité de canal logique améliorée, eLCID, dans le MAC CE, ou
l'utilisation d'un certain groupe de ressources de préambule d'accès aléatoire pour une transmission d'un préambule d'accès aléatoire associé.

7. Procédé selon la revendication 2 ou 6, dans lequel le MAC CE comprend en outre l'identité du dispositif de communication sans fil (412).

8. Procédé selon la revendication 7, dans lequel l'identité du dispositif de communication sans fil (412) est un identifiant provisoire de réseau radio en mode inactif, I-RNTI, ou un I-RNTI court du dispositif de communication sans fil (412), dans lequel, facultativement, le MAC CE comprend en outre un indicateur qui indique si l'identité du dispositif de communication sans fil (412) comprise dans le MAC CE est un I-RNTI ou un I-RNTI court.

9. Procédé selon l'une quelconque des revendications 2 et 6 à 8, dans lequel :

(a) le MAC CE comprend en outre des informations qui indiquent si les un ou plusieurs SIB et/ou les un ou plusieurs posSIB étant demandés par le dispositif de communication sans fil (412) sont un ou plusieurs SIB ou un ou plusieurs posSIB ; et/ou

(b) le MAC CE comprend un sous-en-tête qui comprend l'eLCID, dans lequel l'eLCID comprend une pluralité de bits qui indiquent lesquels d'une pluralité de SIB et/ou de posSIB sont demandés par le dispositif de communication sans fil (412), dans lequel, facultativement, le MAC CE comprend un drapeau dans le sous-en-tête ou dans l'eLCID qui indique si les un ou plusieurs SIB et/ou les un ou plusieurs posSIB étant demandés par le dispositif de communication sans fil (412) sont un ou plusieurs SIB ou un ou plusieurs posSIB.

10. Procédé selon l'une quelconque des revendications 2 et 6 à 8, dans lequel le MAC CE comprend un sous-en-tête qui comprend l'eLCID, dans lequel l'eLCID comprend une pluralité de bits qui indiquent lesquels d'une pluralité de SIB et/ou de posSIB sont demandés par le dispositif de communication sans fil (412), dans lequel, facultativement, le MAC CE comprend un drapeau dans le sous-en-tête ou dans l'eLCID qui indique si les un ou plusieurs SIB et/ou les un ou plusieurs posSIB étant demandés par le dispositif de communication sans fil (412) sont un ou plusieurs SIB ou un ou plusieurs posSIB, dans lequel l'eLCID comprend en outre l'identité du dispositif de communication sans fil (412).

11. Procédé selon la revendication 10 lorsqu'elle dépend de l'une quelconque des revendications 2, 6 et 7, dans lequel l'identité du dispositif de communication sans fil (412) est soit un I-RNTI soit un I-RNTI court du dispositif de communication sans fil (412),

dans lequel, facultativement, l'eLCID comprend en outre un indicateur qui indique si l'identité du dispositif de communication sans fil (412) comprise dans l'eLCID est un I-RNTI ou un I-RNTI court.

12. Procédé selon la revendication 1 ou 4, dans lequel le message comprend un message de commande de ressources radio, RRC, qui comprend les informations qui indiquent les un ou plusieurs SIB et/ou les un ou plusieurs posSIB étant demandés par le dispositif de communication sans fil (412),

dans lequel, facultativement, les informations qui indiquent les un ou plusieurs SIB et/ou les un ou plusieurs posSIB étant demandés par le dispositif de communication sans fil (412) comprennent un bitmap ou une indication explicite qui indique un ou plusieurs SIB et/ou un ou plusieurs posSIB étant demandés par le dispositif de communication sans fil (412).

13. Procédé selon la revendication 4 ou l'une quelconque des revendications 5 à 12 lorsqu'elle dépend de la revendication 4, dans lequel :

- le procédé comprend en outre la transmission (704) d'au moins l'un des un ou plusieurs SIB et/ou d'au moins l'un des un ou plusieurs posSIB au dispositif de communication sans fil (412) dans le cadre d'un Msg 4 d'un accès aléatoire associé ou dans le cadre d'un message de libération RRC ; ou
- le procédé comprend en outre la diffusion (704 ; 804) d'au moins l'un des un ou plusieurs SIB et/ou d'au moins l'un des un ou plusieurs posSIB, dans lequel, facultativement, la diffusion (704 ; 804) de l'au moins un des un ou plusieurs SIB et/ou de l'au moins un des un ou plusieurs posSIB comprend l'envoi d'un ou plusieurs drapeaux de statut de diffusion associés à l'au moins un des un ou plusieurs SIB et/ou à l'au moins un des un ou plusieurs posSIB où les un ou plusieurs drapeaux de statut de diffusion sont changés pour indiquer que l'au moins un des un ou plusieurs SIB et/ou l'au moins un des un ou plusieurs posSIB sont diffusés ; ou
- le procédé comprend en outre la transmission (704 ; 804) d'un message qui désactive la demande des un ou plusieurs SIB et/ou des un ou plusieurs posSIB.

14. Dispositif de communication sans fil (412) adapté pour réaliser le procédé selon l'une quelconque de ce qui suit :

- les revendications 1 à 3 ; et
- l'une quelconque des revendications 5 et 7 à 12 lorsqu'elle dépend de la revendication 1.

15. Nœud de réseau (700 ; 800 ; 900 ; 1000) adapté pour réaliser le procédé selon l'une quelconque de ce qui suit :

- la revendication 4 ;
- la revendication 5 lorsqu'elle dépend de la revendication 4 ;
- la revendication 6 ;
- l'une quelconque des revendications 7 à 12 lorsqu'elle dépend de la revendication 4 ; et
- la revendication 13.

*FIG. 1*

*FIG. 2*

**FIG. 3**

EP 4 305 882 B1

*FIG. 4*

| | | | | | | | | |
|---|---|---|---|---|---|---|---|---|
| R | F | LCID | | | | | | Oct 1 |
| eLCID | | | | | | | | Oct 2 |
| L | | | | | | | | Oct 3 |

## FIG. 5

**MAC Subheader**

| | | | | | | | | |
|---|---|---|---|---|---|---|---|---|
| S | I | Resrved | | | | | | Oct 1 |
| I-RNTI | | | | | | | | Oct 2 |
| I-RNTI | | | | | | | | Oct 3 |
| I-RNTI | | | | | | | | Oct 4 |
| I-RNTI | | | | | | | | Oct 5 |
| I-RNTI | | | | | | | | Oct 6 |
| SI Request BITS 1-8 | | | | | | | | Oct 7 |
| SI Request BITS 9-16 | | | | | | | | Oct 8 |
| SI Request BITS 17-24 | | | | | | | | Oct 9 |
| SI Request BITS 25-32 | | | | | | | | Oct 10 |

## FIG. 6

```
┌─────────────────┐                                    ┌──────────┐
│  NETWORK NODE   │                                    │    UE    │
│       700       │                                    │   412    │
└────────┬────────┘                                    └─────┬────┘
         │                                                   │
         │                                              ╭──────────────╮
         │                                              │ RRC_INACTIVE │
         │                                              ╰──────────────╯
         │   702.  MAC CE THAT INDICATES REQUESTED SIB(S) AND/OR posSIB(S)
         │◄──────────────────────────────────────────────────┤
```

PERFORM ACTION(S) RESPONSIVE TO THE RECEIVED
MAC CE (E.G., SEND MAC CE TO UE TO DISABLE
SIB(S)/posSIB(S) REQUEST, SEND AT LEAST SOME OF
THE REQUESTED SIB(S)/posSIB(S) TO THE UE VIA SDT,
SEND AT LEAST SOME OF THE REQUESTED SIB(S)/
posSIB(S) TO THE UE VIA BROADCAST)
706

*FIG. 7*

EP 4 305 882 B1

```
┌─────────────────────┐                              ┌──────────┐
│   NETWORK NODE      │                              │    UE    │
│       800           │                              │   412    │
└─────────────────────┘                              └──────────┘
          │                                                │
                                                     ⟨ RRC_INACTIVE ⟩
          │                                                │
          │   802.  RRC MESSAGE THAT INDICATES REQUESTED SIB(S) AND/OR posSIB(S)
          │◄───────────────────────────────────────────────┤
          │                                                │
┌─────────────────────────────────────────┐               │
│ PERFORM ACTION(S) RESPONSIVE TO THE RECEIVED │            │
│ RRC MESSAGE (E.G., DISABLE SIB(S)/posSIB(S)  │            │
│ REQUEST, SEND AT LEAST SOME OF THE REQUESTED │            │
│ SIB(S)/posSIB(S) TO THE UE VIA SDT, SEND AT LEAST │       │
│ SOME OF THE REQUESTED SIB(S)/posSIB(S) TO THE │          │
│          UE VIA BROADCAST)                │               │
│               804                         │               │
└─────────────────────────────────────────┘               │
          │                                                │
```

*FIG. 8*

```
       ┌──────────┐                          ┌────────────────────┐
       │    UE    │                          │   NETWORK NODE     │
       │   412    │                          │        900         │
       └──────────┘                          └────────────────────┘
    ╭───────────────╮
    │ RRC_INACTIVE  │
    ╰───────────────╯
```

902. MSG A (RA PREAMBLE + RRCResumeRequest + DATA +
SIB REQ.)

904.  MSG B (RRCRelease + OPTIONAL DL ASSIGNMENT)

906.  RRC SIB

```
    ╭───────────────╮
    │ RRC_INACTIVE  │
    ╰───────────────╯
```

*FIG. 9*

FIG. 10

**FIG. 11**

**FIG. 13**

FIG. 12

EP 4 305 882 B1

1400

1412

TRANSCEIVER(S)
1406

1412

MEMORY
1404

PROCESSOR(S)
1402

TX(S) 1408

RX(S) 1410

*FIG. 14*

UE
1400

MODULE(S)
1500

*FIG. 15*

**FIG. 16**

1700

HOST COMPUTER 1702

1728

SW
1710

HOST APPLICATION
1712

HW
1704

COMMUNICATION
INTERFACE
1706

PROCESSING
CIRCUITRY
1708

BASE STATION 1718

SW
1732

HW
1720

COMMUNICATION
INTERFACE
1722

RADIO INTERFACE
1724

PROCESSING
CIRCUITRY
1730

1716

UE 1714

SW
1740

CLIENT APPLICATION
1742

HW
1734

RADIO INTERFACE
1736

PROCESSING
CIRCUITRY
1738

1726

FIG. 17

BEGIN

HOST COMPUTER
PROVIDES USER DATA
1800

←→

HOST COMPUTER
EXECUTES HOST
APPLICATION
1802

HOST COMPUTER
INITIATES
TRANSMISSION
CARRYING THE USER
DATA TO THE UE
1804

BASE STATION
TRANSMITS THE USER
DATA
1806

UE EXECUTES THE
CLIENT APPLICATION
1808

END

*FIG. 18*

BEGIN

HOST COMPUTER
PROVIDES USER DATA
1900

HOST COMPUTER
INITIATES
TRANSMISSION
CARRYING THE USER
DATA TO THE UE
1902

UE RECEIVES THE USER
DATA
1904

END

*FIG. 19*

BEGIN

UE RECEIVES INPUT
DATA PROVIDED AT
HOST COMPUTER
2000

⟷

UE EXECUTES
CLIENT
APPLICATION
2004

UE PROVIDES USER
DATA
2002

⟷

UE EXECUTES
CLIENT
APPLICATION
2006

UE INITIATES
TRANSMISSION OF THE
USER DATA TO THE
HOST COMPUTER
2008

HOST COMPUTER
RECEIVES USER DATA
TRANSMITTED FROM
THE UE
2010

END

**FIG. 20**

BEGIN

BASE STATION
RECEIVES USER DATA
FROM UE
2100

BASE STATION INITIATES
TRANSMISSION OF USER
DATA TO THE HOST
COMPUTER
2102

HOST COMPUTER
RECEIVES THE USER
DATA
2104

END

**FIG. 21**

**RRCSystemInfoRequest**

The *RRCSystemInfoRequest* message is used to request SI message(s) required by the UE as specified in clause 5.2.2.3.3.

    Signalling radio bearer: SRB0
    RLC-SAP: TM
    Logical channel: CCCH
    Direction: UE to Network

***RRCSystemInfoRequest message***
-- ASN1START
-- TAG-RRCSYSTEMINFOREQUEST-START

```
RRCSystemInfoRequest ::=        SEQUENCE {
    criticalExtensions          CHOICE {
        rrcSystemInfoRequest            RRCSystemInfoRequest-IEs,
        criticalExtensionsFuture-r16    CHOICE {
            rrcPosSystemInfoRequest-r16     RRC-PosSystemInfoRequest-r16-IEs,
            criticalExtensionsFuture        SEQUENCE {}
        }
    }
}

RRCSystemInfoRequest-IEs ::=    SEQUENCE {
    requested-SI-List           BIT STRING (SIZE (maxSI-Message)),   --32bits
    spare                       BIT STRING (SIZE (12))
}

RRC-PosSystemInfoRequest-r16-IEs ::=    SEQUENCE {
    requestedPosSI-List             BIT STRING (SIZE (maxSI-Message)),   --32bits
    spare                           BIT STRING (SIZE (11))
}
```

-- TAG-RRCSYSTEMINFOREQUEST-STOP
-- ASN1STOP

| ***RRCSystemInfoRequest-IEs* field descriptions** |
| --- |
| ***requested-SI-List*** |
| Contains a list of requested SI messages. According to the order of entry in the list of SI messages configured by *schedulingInfoList* in si-*SchedulingInfo* in *SIB1*, first bit corresponds to first/leftmost listed SI message, second bit corresponds to second listed SI message, and so on. |
| ***requestedPosSI-List*** |
| Contains a list of requested SI messages. According to the order of entry in the list of SI messages configured by *posSchedulingInfoList* in *posSI-SchedulingInfo* in *SIB1*, first bit corresponds to first/leftmost listed SI message, second bit corresponds to second listed SI message, and so on. |

*FIG. 22*

```
RRCSystemInfoRequest message
-- ASN1START
-- TAG-RRCSYSTEMINFOREQUEST-START

RRCSystemInfoRequest ::= SEQUENCE {
    criticalExtensions        CHOICE {
    rrcSystemInfoRequest                RRCSystemInfoRequest-IEs,
    criticalExtensionsFuture-r16              CHOICE {
            rrcPosSystemInfoRequest-r16                RRC-PosSystemInfoRequest-r16-IEs,
            criticalExtensionsFuture                   SEQUENCE {}
    }
  }
}

RRCSystemInfoRequest-IEs ::=  SEQUENCE {
    requested-SI-List              BIT STRING (SIZE (maxSI-Message)),  --32bits
    sdt-Supported-r1               ENUMERATED (TRUE  OPTIONAL,
    spare                          BIT STRING (SIZE (11))
}

RRC-PosSystemInfoRequest-r16-IEs ::=  SEQUENCE {
    requestedPosSI-List            BIT STRING (SIZE (maxSI-Message)),  --32bits
    sdt-Supported-r17              ENUMERATED (TRUE  OPTIONAL,
    spare                          BIT STRING (SIZE (10))
}

-- TAG-RRCSYSTEMINFOREQUEST-STOP
-- ASN1STOP
```

*FIG. 23*

**RRCResumeRequest**

The RRCResumeRequest message is used to request the resumption of a suspended RRC connection or perform an RNA update.

    Signalling radio bearer: SRB0
    RLC-SAP: TM
    Logical channel: CCCH
    Direction: UE to Network

```
RRCResumeRequest message
-- ASN1START
-- TAG-RRCRESUMEREQUEST-START

RRCResumeRequest ::=        SEQUENCE {
        rrcResumeRequest               RRCResumeRequest-IEs
}

RRCResumeRequest-IEs ::=    SEQUENCE {
        resumeIdentity                 ShortI-RNTI-Value,
        resumeMAC-I                    BIT STRING (SIZE (16)),
        resumeCause                    ResumeCause,
        spare                          BIT STRING (SIZE (1))
}

-- TAG-RRCRESUMEREQUEST-STOP
-- ASN1STOP
```

| *RRCResumeRequest-IEs* field descriptions |
|---|
| **resumeCause** |
| Provides the resume cause for the RRC connection resume request as provided by the upper layers or RRC. The network is not expected to reject an *RRCResumeRequest* due to unknown cause value being used by the UE. |
| **resumeIdentity** |
| UE identity to facilitate UE context retrieval at gNB. |
| **resumeMAC-I** |
| Authentication token to facilitate UE authentication at gNB. The 16 least significant bits of the MAC-I calculated using the AS security configuration as specified in 5.3.13.3. |

## FIG. 24

**EP 4 305 882 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 63159173 A

- US 20190124715 A1

**Non-patent literature cited in the description**

- **HUAWEI et al.** Post112-e][609][POS] Positioning support in RRC_IDLE and RRC_INACTIVE (Huawei). *3GPP draft R2-2101230*